(19) Europäisches Patentamt
European Patent Office
Office européen des brevets

(11) **EP 4 084 885 B1**

(12) **EUROPEAN PATENT SPECIFICATION**

(45) Date of publication and mention
of the grant of the patent:
**26.06.2024  Bulletin 2024/26**

(21) Application number: **21805580.4**

(22) Date of filing: **21.10.2021**

(51) International Patent Classification (IPC):
*B01D 29/01* (2006.01)    *B01D 29/11* (2006.01)
*B01D 29/64* (2006.01)    *B01D 35/16* (2006.01)
*D06F 39/10* (2006.01)

(52) Cooperative Patent Classification (CPC):
**B01D 29/01; B01D 29/11; B01D 29/64;
B01D 35/16; D06F 39/10**

(86) International application number:
**PCT/GB2021/052722**

(87) International publication number:
**WO 2022/084677 (28.04.2022 Gazette 2022/17)**

(54) **A MICROPARTICLE FILTER, A TEXTILE TREATMENT APPARATUS AND METHOD OF FILTERING MICROPARTICLES**

MIKROPARTIKELFILTER, TEXTILBEHANDLUNGSGERÄT UND VERFAHREN ZUM FILTERN VON MIKROPARTIKELN

FILTRE À MICROPARTICULES, APPAREIL DE TRAITEMENT DE TEXTILE ET PROCÉDÉ DE FILTRATION DE MICROPARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2020  GB 202016683
17.09.2021  GB 202113285**

(43) Date of publication of application:
**09.11.2022  Bulletin 2022/45**

(73) Proprietor: **Xeros Limited
Rotherham, South Yorkshire S60 5BL (GB)**

(72) Inventors:
• **WALLACE, Thomas John
Rotherham, South Yorkshire S60 5BL (GB)**
• **PEASE, James Richard
Rotherham, South Yorkshire S60 5BL (GB)**
• **COBB, Thomas Andrew
Rotherham, South Yorkshire S60 5BL (GB)**
• **MATTLEY, Joseph
Rotherham, South Yorkshire S60 5BL (GB)**

(74) Representative: **Secerna LLP
The Old Fire Station
18 Clifford Street
York YO1 9RD (GB)**

(56) References cited:
**WO-A1-2019/081013    GB-A- 2 576 859
GB-A- 2 581 790    JP-A- 2018 175 680**

## Description

## Field of the Invention

The present disclosure relates to a microparticle filter and to a textile treatment apparatus comprising the microparticle filter. The present disclosure also relates to the use of the microparticle filter and the textile treatment apparatus, and to methods of filtering microparticles from effluent from a treated textile.

## Background

The washing of synthetic textiles is believed to be the largest contributor to microplastic pollution to the world's oceans, contributing an estimated 35% of primary microplastics. The release of microplastics from synthetic clothes is caused by the mechanical and chemical stresses that synthetic fabrics undergo during a washing cycle in a laundry machine. These stresses cause the detachment of microfibres from synthetic textiles. Due to their dimensions, the released microfibres partially pass through wastewater treatment plants and enter the oceans. Microfibres can be found in beaches worldwide, in the water of the Pacific Ocean, the North Sea, the Atlantic Ocean, the Artic, in deep sea sediments, and have recently been identified in human organs. Their size can cause them to be consumed by microorganisms, which are unable to digest them, causing them to persist and pass up the food chain.

There is an increasing need to prevent microfibres from entering water systems. To prevent release of microparticle from washing machines, numerous microparticle filters have been designed. Microparticle filters typically use a porous mesh with pore sizes in the order of 100 $\mu$m. These microparticle filters may catch the majority of the larger synthetic fibres, but they are unable able to catch microparticles smaller than 100 $\mu$m in size, synthetic or otherwise. WO 2019/081013 A1 discloses a washing machine which has a drum, a sump underneath the drum, a water circulation including an extractible drawer for introducing detergent or additives, the water circulation being in fluid connection to detecting means for detecting microfibers or contamination in the water and a circulation pump and pipes for circulating water. GB 2 576 859 A discloses a compactor for extracting and compressing microplastics from waste effluent. GB 2 581 790 A discloses a filter cartridge comprising a delivery spool, an uptake spool, a perforated partition wall extending between the spools, an elongate liquid permeable filter sheet extending between the spools along the partition wall and a drive coupling associated with at least one of the spools. JP 2018 175680 A discloses a filter cleaning mechanism including: a filter for capturing lint; cleaning means for cleaning the lint attached on the filter; and one portion of an air blowing path including a portion positioned on the upstream side of the filter.

Cellulose containing textiles such as cotton or polycotton shed cellulose microfibres. The cellulose microfibres are typically crystalline in nature and may persist in oceans in the same manner as synthetic microparticles. Cellulose microparticles have been attracting increasing attention as a pollutant in their own right. There exists a need in the art for a filter capable of capturing cellulose microparticles from wastewater. The inventors of the present disclosure have found that cellulose microparticles are typically smaller than 100 $\mu$m and pass through most microparticle filters.

To increase the capture of cellulose microparticles, the pore size of the filter can be reduced. However, the present inventors have discovered that the effluent from washing machines with a typical cotton load can rapidly block microparticle filters with a sub-100 $\mu$m pore size. This means the filter requires frequent cleaning or replacement, decreasing usability of the filter. There therefore remains a need to provide a microparticle filter and a method of filtering microparticles with improved capture of microparticles, especially cellulose microparticles and/or providing a microparticle filter and method of filtering with improved usability and/or a resistance to blocking.

It is an object of the present invention to provide improvements generally and/or to address, at least in part, one or more of the abovementioned problems.

## Summary of the Invention

The present inventors have found that when a filtration medium with a pore size sufficiently small to capture cellulose microparticles is used in a microparticle filter, the micro particle filter becomes susceptible to rapid blockage. Investigations by the present inventors have shown that blockage is due to a thin film forming on the filter medium. In a domestic setting for example, blockage through a thin film may occur after even a single wash cycle with various different filters. Once the film forms, it is very tough to remove from the filter medium. The present inventors have found that the film is substantially comprised of cellulose microparticles. Investigations by the inventors have also found that it may not be sufficient to scrape, wash or dislodge residue from the filter medium during use. Doing so may merely relocate the cellulose residue from the filter medium to elsewhere within the filter chamber where it returns to the filter medium at the next influx of effluent. The inventors have also found that to reduce the intervention needed by the user, the residue that accumulates on the filter medium should be frequently removed from the microparticle filter so that the quantity of residue in the filter chamber and upstream of the filter medium is kept low. However, frequent removal of filter residue from the filter chamber increases the user intervention. The present disclosure provides a microparticle filter, a textile treatment apparatus, uses thereof and methods to reduce the intervention required by a user for the filtration of microparticles, and especially cellulose microparticles, from effluent from a textile treatment apparatus. Aspects of the present disclosure allow for intermittent emptying of the filter residue from the microparticle filter chamber into a filter residue collection chamber. Intermittent emptying of residue in the filter chamber reduces intervention by the user and increases filter usability. Intermittent emptying may also prevent the concentration of cellulose microparticles upstream of the filter medium increasing to a level where a cellulose film forms.

According to a first aspect of the present disclosure there is provided a microparticle filter suitable for filtering microparticles from effluent from a textile treatment apparatus, the filter comprising:

a filter chamber comprising chamber walls, an inlet and an outlet;

a filter medium contained within the filter chamber, the filter medium configured to filter cellulose microparticles from the effluent forming a filter residue and providing a filtered effluent to the outlet;

a filter residue collection chamber located external to the filter chamber;

a filter residue removal apparatus; and

wherein the chamber walls comprise an opening and a moveable member movable between a first and a second configuration; wherein:

in the first configuration the moveable member closes the opening to seal the filter chamber so that entry of the effluent into the filter chamber is through the inlet only, and exit of the filtered effluent from the filter chamber is through the outlet only; and

in the second configuration the moveable member is removed from the opening so that the filter residue removal apparatus is operable to remove filter residue from the within the filter chamber to the filter residue collection chamber through the opening;

characterised in that:

the filter medium comprises a central axis through the centre of the filter medium and the filter medium is rotatable around the central axis; and

the filter residue removal apparatus comprises a rotary actuator configured to rotate the filter medium to throw filter residue off the filter medium.

The microparticle filter may be operable to drain effluent from the filter chamber in the first configuration to reduce the water content of the filter residue before it is removed from the filter chamber. The microparticle filter may be configured so that effluent may drain from the microparticle filter. Draining may optionally be passive, i.e. under the influence of gravity, or may be active, e.g. by pumping or circulating air or applying a vacuum.

The microparticle filter may be suitable for filtering cellulose microparticles. A microparticle filter suitable for filtering cellulose microparticles may be able to capture cellulose microfibres smaller than 30 $\mu$m, or smaller than 40 $\mu$m, or smaller than 50 $\mu$m, or smaller than 60 $\mu$m or smaller than 70 $\mu$m, or smaller than 80 $\mu$m. Optionally, the microparticle filter may be able to capture cellulose microfibres no smaller than 10 $\mu$m, or 30 $\mu$m, or 50 $\mu$m. A microparticle filter suitable for filtering cellulose microparticles may comprise a filter medium with a pore size suitable for filtering cellulose microfibres of the size defined above. A microparticle filter suitable for filtering cellulose microparticles may be capable of filtering effluent containing cellulose microparticles from a textile treatment machine for up to 2 cycles, or up to 5 cycles, or up to 10 cycles, or up to 15 cycles, or up to 30 cycles, or any number of cycles without blocking. Blocking is defined as a state where the filter membrane is substantially covered with microparticles (optionally predominantly cellulose microparticle) to the extent that the filter can no longer be used to filter effluent from a textile treatment machine.

The microparticle filter may comprise a valve in the inlet that is openable to allow entry of effluent into the filter chamber and closable to prevent entry of effluent into the filter chamber. The microparticle filter may be connected to a textile treatment apparatus. The textile treatment apparatus may comprise a valve or pump upstream of the microparticle filter or a vacuum source downstream of the microparticle filter. The valve, pump or vacuum source may be operable to supply and/or prevent the supply of effluent to the microparticle filter. The valve, pump or vacuum source may be operable to supply effluent from a treatment cycle of the textile treatment apparatus. The valve, pump or vacuum source may be operable to interrupt supply of effluent during a treatment cycle of the textile treatment apparatus to allow for removal of filter residue from the filter chamber.

The filter may comprise a filter axis. The filter axis may be coincident and parallel with an axis of rotational symmetry through the filter chamber or may pass through the centre of the filter chamber (i.e. coincident with the centre of mass were the chamber to be assumed to be a homogenous body). The filter axis may also pass through the inlet and outlet of the microparticle filter. Specifically, the filter axis may also pass through the centre of the inlet and outlet. In some embodiments the filter axis may be parallel and coincident with a central axis of the filter medium. In some embodiments the central axis is parallel with the horizontal direction or with the vertical direction.

The central axis of the filter medium is defined as an axis that passes through the centre of the filter medium. For example, where the filter is cylindrical, the central axis will be the axis passing through the centre of the cylinder (i.e. the cylindrical axis). Where the filter is planar and a circle, or conical with a circular base, the central axis will be perpendicular to the circle and passing through its centre, for example. Therefore, in embodiments where the filter axis and the central axis of the filter medium are coincident and parallel, the centre of the filter medium is coincident with the central axis of the filter chamber. In some embodiments the filter axis is parallel with the horizontal direction or with the vertical direction.

In embodiments where the filter chamber is configured to rotate, the filter chamber may be rotatable about the filter axis.

A radial direction may be considered to be a direction extending perpendicularly outwards from the central axis and a circumferential direction may be around the central axis at a constant radius.

The filter chamber contains the filter medium and directs the flow of the effluent through the filter medium. The filter chamber may be a closed unit. That is to say the filter chamber is sealed during filtration in the first configuration and liquid can only enter and exit via the inlet and outlet, respectively.

The filter chamber may take a range of shapes, including generally cylindrical and rectangular, amongst others. A particularly preferred shape is one that approximates to a cylindrical shape. Prisms based on polygons with or without smoothed edges are also examples of suitable shapes, in particular, higher order polygons i.e. those with 5 or more sides. In some embodiments, the filter chamber may be rotated about a filter axis. In these embodiments the filter chamber may have a shape which is readily rotatable about an axis of rotation without causing any substantial imbalance or vibration when rotated. In these embodiments, such shapes are those with a rotational symmetry of order 2 or greater about the filter axis are particularly preferred, such as the exemplary shapes listed above.

**Chamber Walls**

The shape of the filter chamber is defined by the chamber walls. The chamber walls may also define the inlet and the outlet, which may be considered as openings into the filter chamber to allow entry effluent and exit of filtered effluent.

The chamber walls may be formed by a single continuous wall that extends as a hollow three dimensional shape, or it may comprise a plurality connected walls, or a combination of the of continuous and connected walls. Where a plurality of chamber walls are connected to form the filter chamber, they may be connected by welding, adhesives, clips, bolts, screws, magnets, screw threads, interference surfaces and the like. At least some non-permanent connections may be preferred which include clips, bolts, screws, magnets, screw threads, interference surfaces and the like. Non-permanent connections may allow for disassembly and access into the filter chamber.

The chamber walls may be made from engineering materials. Engineering materials may include a polymer, a metal, and/or a ceramic material. Non limiting examples of suitable metals include: aluminium, titanium, and alloys for example steel (including stainless steel). Polymers may include thermoset and thermoplastic polymers. Non-limiting examples of suitable polymers include: Polyether ether ketone (PEEK), Poly(methyl methacrylate) (PMMA), Polyethylene terephthalate (PET), Polyphenylene sulfide (PPS), Poly(p-phenylene oxide) (PPO), Acrylonitrile butadiene styrene (ABS), Polybutylene terephthalate PBT, Polyether ketones (PEK), polyamides, polyimides, polyethylene, polypropylene, polycarbonates, polyacetals and polysulphones.

The inlet and the outlet may be considered as openings into and out of the filter chamber. In some embodiments the inlet and/or the outlet may comprise a plurality of openings in the chamber walls, collectively referred to herein in the singular as "inlet" or "outlet". The inlet is typically the only pathway through which effluent may enter the filter chamber and the outlet is typically the only pathway through which filtered effluent exits the filter chamber. The filter residue typically exits through the opening in the chamber walls provided by the moveable member, preferably in a non-flowable state rather than as a readily flowable liquid.

In some embodiments, the inlet may be positioned at a vertically raised elevation of the filter chamber, and optionally the vertically top-most portion of the filter chamber, so that gravity can feed effluent through the filter chamber via the inlet. In some embodiments the outlet may be positioned below the inlet and the filter element so that filtered effluent may passively drain out of the outlet. Specifically, the outlet may be the vertically lowest part of filter chamber to maximise the draining of filtered effluent from the filter chamber and thus dewatering of filter residue. In some embodiments the inlet and the outlet may be aligned on a common axis, specifically, the centres of the inlet and outlet may optionally be aligned on a common axis passing through the centre of the filter chamber. In particular, the centres of the inlet and outlet may be aligned with the central axis. In some embodiments the outlet may comprise a plurality of individual openings, which may optionally be circumferentially spaced at a constant radius from the central axis.

In some embodiments, the filter chamber may comprise a first end wall and an opposed second end wall. Both the first and second end walls of the filter chamber may be coincident with the central axis. The inlet may be in the first end wall of the filter chamber. The filter chamber may comprise one or more sidewalls between the first and second end walls. The second end wall may also be comprised as part of the moveable member. One or more sidewalls may also o alternatively be comprised as part of the moveable member. One or more sidewalls may be planar, cylindrical, curved or complex in shape.

The outlet may be in a sidewall of the filter chamber. The outlet may be between the filter medium and the first end. Position in this context may refer to a position along the filter chamber parallel to the central axis. The outlet may be in a sidewall and adjacent to the first end of the filter chamber. In some embodiments, the outlet may be aligned parallel to a tangent of the sidewall cross section. Optionally the sidewall may be circular when viewed in a cross-section perpendicular to the central axis and the outlet aligned at a tangent from the circular sidewall.

In some embodiments, the inlet may be an opening in a wall, preferably an end wall of the filter chamber. In some further embodiments a pipe may connect to the inlet to pass effluent through the inlet. A pipe may be external to the filter chamber and extend to the inlet, or may be inside of the filter chamber and extend from the inlet, or may extend from external to the filter chamber, through the inlet to the interior of the filter chamber. In embodiments where a pipe is in the interior of the filter chamber the pipe may also pass though the centre of the filter medium. Optionally the pipe may be aligned with the central axis and/or optionally the pipe may be arranged to rotate with the filter medium and/or the impellor. In some alternative embodiments, the inlet or pipe may direct the effluent in a direction which is initially away from the first surface of the filter medium. Subsequent flow of the effluent in the filter chamber may then direct the effluent through the filter medium. Optionally the pipe may direct effluent through the filter medium. Effluent may then exit the pipe and the centre of the filter medium, before being redirected through the filter medium.

Optionally no channels, passages or constrictions may exist within the filter chamber through which the effluent flows which have a size of less than 1mm, 3mm, 5mm, 7mm or 10 mm excluding the pores of the filter medium.

**Moveable Member**

The chamber walls further comprise a moveable member. In the second configuration the moveable member has been moved to a position that provides an opening in the chamber walls. The opening may be a space or aperture in the chamber walls. In the first configuration the opening may be either blocked or closed by the moveable member or the opening may only be present when the moveable member has moved to the second configuration. In the second configuration the opening is preferably open and is preferably accessible from the filter chamber. The opening is preferably sized and shaped to allow filter residue to be removed from the filter chamber when the microparticle filter is in the second configuration. The opening may comprise a single aperture located in the chamber walls, or the opening may comprise a plurality of apertures in the chamber walls when considered in the second configuration. In the latter case, the plurality of apertures are referred to herein collectively as the "opening". The opening may be quadrilateral, circular, irregular, annular, or otherwise shaped. In some embodiments, the opening may continuously extend around a perimeter of the filter chamber and in particular, may extend around the entire circumference of a cylindrical filter body. The opening may have a smallest opening dimension of at least 2 cm, or at least 3 cm, or at least 4 cm or at least 5 cm or at least 8 cm, or at least 15 cm, or at least 25 cm, or at least 40 cm. The smallest opening dimension may not exceed 1 m, or 60 cm, or 30 cm, or 20 cm, or 10 cm.

The moveable member may be considered as any element that can move from the first configuration to the second configuration. The moveable member may comprise a shape geometrically similar to the opening. The moveable member may be substantially planar or three dimensional. A planar moveable member may be circular, ellipsoidal, polygonal, quadrilateral, or irregularly shaped, amongst others. A three dimensional moveable member may, for example, be substantially cuboidal, curved; a hollow cylinder or prism, or an annular or arcuate band that conforms to an external or internal surface of a cylindrical or prismatic filter chamber. A three dimensional moveable member may, may alternatively be shaped as a frustrum, cone, cylinder, or pyramid. In some embodiments, the moveable member may comprise the majority of the filter chamber.

In some embodiments, the moveable member may comprise one or more apertures and one or more non-apertured regions. Such a moveable member may be used with chamber walls comprising an equivalent number of apertures, which may be geometrically similar to the apertures of the moveable member. In the first configuration the non-apertured regions of the moveable member may be positioned so that they close the openings of the filter chamber. In the second configuration, the apertures of the moveable member may be aligned with the apertures in the chamber wall to provide one or more openings. In some embodiments the above described moveable member may rotate about an axis from the first configuration to the second configuration where the apertures of the moveable member are aligned with the apertures of the chamber walls. In particular the moveable member may be cylindrical and/or may rotate around the filter axis. Alternatively, the moveable member may be planar (optionally circular) and may rotate around a point of rotation through the moveable member (e.g. around the centre of the moveable member). In some embodiments, the filter medium may move with the movable member.

Movement of the moveable member between the first and second configurations may be linear. That is, movement from the first configuration to the second configuration may be along a linear vector. Movement from the second configuration to the first configuration may be along the reverse of the vector. A non-limiting exemplary linear path may be outwards and inwards, along the radial direction, the radial direction defined as perpendicular to the filter axis. A second non-limiting exemplary linear path may be substantially parallel to the central axis of the filter chamber. The moveable member may move away from inlet and/or from the outlet when moving from the first configuration to the second configuration.

Alternatively, the movement of the moveable member between the first and second configurations may be non-linear e.g. along an arcuate path. An arcuate path may include a curved path with a constant radius around a fixed point. Exemplary movement of the moveable member between the first and second configurations along an arcuate path may be in a circumferential direction, e.g. an arc of constant radius around a filter axis. For example, the moveable member may be planar and aligned in a plane perpendicular to the filter axis. The moveable member may rotate along a circumferential direction around the filter axis remaining in the same plane throughout the motion. Alternatively, the moveable member may rotate around an axis the is not coincident with the filter axis, for example, the moveable member may rotate around a pivot point, the pivot point may be located through a part of the moveable member, for example, the centre or an edge of the moveable member.

The moveable member may be non-planar, for example, it may be cylindrical and optionally may be positioned external the circumference of the filter chamber. A cylindrical moveable member may move non-linearly by being rotated around the filter axis to align an aperture in the moveable member with the opening or may move linearly by moving parallel to the central axis, and optionally in the horizontal direction. The opening may be annular or cylindrical, i.e. a similar shape to the moveable member. Alternatively, the moveable member may comprise a hinge and the moveable member may rotate about the hinge to move between the first and second configurations.

In some embodiments the microparticle filter may comprise an actuator configured to move the moveable member between the first configuration and the second configuration. An actuator may comprise amongst others: hydraulic devices, pneumatic devices, and electromagnetic devices. Non-limiting examples electromagnetic devices include electric linear motion actuators (i.e. a linear actuator), rotary motors, and electromagnets. An actuator may be considered to be an actuator which operated by a control signal.

Where the moveable member moves linearly, preferably the actuator provides linear motion. Optionally the linear actuator may be connected to the moveable member via a direct connection or via a lever arm. The connection between the moveable member and actuator may comprise a rotatable linkage or other connection that permits rotation between the actuator and the moveable member. This may assist in aligning the moveable member with the sidewalls of the filter chamber when returning to the first configuration. The movable member may comprise a rotatable bearing between the actuator and the moveable member. The rotatable bearing may permit rotation around the central axis. The rotatable bearing may permit the moveable member to rotate with the filter medium and/or the filter support. Alternatively, the movable member may not rotate with the filter medium and/or the filter support. Where the moveable member moves around an axis of rotation between configurations, preferably the actuator provides rotary motion. Optionally the linear actuator may be proximal to the second end wall of the filter chamber, which in some embodiments, may be the opposite end of the filter chamber to the inlet and/or outlet. In some embodiments the moveable member may rotate with the filter support and/or filter media, and or pipe, and/or impellor, during filtration or dewatering. In such embodiments, the moveable member may comprise a bearing to permit rotation around the central axis.

A biasing force may be applied to the moveable member when it is in the first configuration. This may help maintain a seal in the filter chamber. A biasing force may be applied by a biasing means. Thus, the microparticle filter may comprise a biasing means configured to apply a biasing force to the moveable member when the microparticle filter is in a first configuration. A biasing means may comprise amongst others: an actuator configured to apply a biasing force or spring element. An actuator may include amongst others: hydraulic devices, pneumatic devices, and electromagnetic devices. Non-limiting examples of electromagnetic devices include: electric linear motion actuators, rotary motors and electromagnets. A spring element may comprise amongst others: springs such as coil springs, leaf springs, air springs and elastomers. Where the biasing means comprises an actuator configured to apply a biasing force, this may be the same actuator used to move the moveable member between the first and second configurations, and in some embodiments it may also be the same actuator used to rotate the filter element. An example of how an actuator may be configured to apply a biasing force may include a linear actuator arranged to push the moveable member against seals on the chamber walls when the moveable member is in the first configuration. Further the filter may comprise a controlled adapted to control the actuator to impart a biasing force when in the first configuration.

When the moveable member is in the first configuration, a portion of the moveable member may contact a portion of the chamber walls to provide a seal to the filter chamber. The contact may be around and/or immediately adjacent to the opening. A portion of the chamber walls may comprise one or more cooperating surfaces which may cooperate with a corresponding surface of the moveable member. Likewise, a portion of the moveable member may comprise one or more cooperating surfaces which cooperates with a corresponding surface of the chamber walls. A cooperating surface may, for example, be a groove, channel or other shape to receive or interlock with the other cooperating surface. A cooperating surface may be any structures of the movable member and chamber walls that forms a tight fit or tortuous path preventing liquid escape. A cooperating surface may comprise one or more conformable members which deforms to form a seal when in contact with the other cooperating surface. A deformable member may include any suitable seals. Non limiting examples of suitable seals include: X-ring seals, O-ring seals, lip seals, cone seals, V-seals, wedge seals, bellows seals, u-cup seals, packing seals and pusher seals. A particularly preferred seal may be a bellows seal X-ring or O-ring.

The moveable member may be made from engineering materials. Engineering materials may comprise a polymer, a metal, or a ceramic material. Non limiting examples of suitable metals include: aluminium, titanium, and alloys for example steel (including stainless steel). Polymers may include thermoset and thermoplastic polymers. Non-limiting examples of suitable polymers include: Polyether ether ketone (PEEK), Poly(methyl methacrylate) (PMMA), Polyethylene terephthalate (PET), Polyphenylene sulfide (PPS), Poly(p-phenylene oxide) (PPO), Acrylonitrile butadiene styrene (ABS), Polybutylene terephthalate PBT, Polyether ketones (PEK), polyamides, polyimides, polyethylene, polypropylene, polycarbonates, polyacetals and polysulphones.

## Effluent

As used herein, an "effluent" is the substance to be filtered by the microparticle filter. The effluent is the feed that is supplied to the inlet of the microparticle filter. Typically, the effluent is a fluid comprising a solid material. Typically, the fluid is or comprises a liquid. Some or all of the solid material is removed from the effluent by the filter medium. The resulting substance is filtered effluent. Typically, the effluent may comprise a textile treatment formulation that has been used in the treatment of a textiles such as garments. The amount of solid material in the effluent may vary depending on the textile being treated, the type of treatment and the stage of the treatment. As such the concentration of solid in the effluent may vary considerably.

The solid material in the effluent typically includes particles derived from the textiles (also known as "lint"), soil or a combination thereof.

The effluent is preferably flowable i.e. a liquid and not in the form of a paste or semi-solid. The effluent is typically an aqueous liquid. When the effluent comprises liquids other than water these may be alcohols, ketones, ethers, cyclic amides and the like. The liquid may comprise at least 50wt%, or at least 80wt%, or at least 90wt% of water.

The solid material present in the effluent may be in the form of particles, especially microparticles. Preferably, the particles are or comprise fibres, in particular microfibres. The effluent preferably comprises at least some fibres as the solid material. The fibres in the effluent may be natural, synthetic, semi-synthetic or a mixture thereof. Natural fibres may include cellulose microfibres.

For particles which are or comprise fibres, the fibres preferably have a longest linear dimension of greater than about 1 $\mu$m and typically no longer than about 5 mm, typically no longer than about 1mm. Fibres having a longest linear dimension of greater than about 1 $\mu$m and typically no longer than about 0.5mm, typically less than about 1 mm, are typically referred to as "microfibres".

The effluent may comprise less than 30 wt.%, or less than 20 wt.% and or less than 10 wt.% of solid material prior to entry into the filter (as a percentage of the total mass of the solid material and the liquid). The effluent may comprise at least 0.001 wt.%, or at least 0.01 wt.%, or at least 0.1wt% of solid material (as a percentage of the total mass of the solid material and the liquid).

The effluent may comprise from about 0.01 wt.% to about 5 wt.% solid material, or from about 0.1 wt.% to about 3.5 wt.% solid material (as a percentage of the total mass of the solid material and the liquid).

## Filter Residue Removal Apparatus

The filter residue apparatus may comprise combinations of elements that cooperate to remove filter residue from the filter chamber. Elements may include amongst others: actuator(s), a contact element, apparatus to facilitate rotation of filter medium and/or compressed air apparatus.

The filter residue removal apparatus may operate to remove filter residue by pushing, pulling, dropping, or throwing filter residue out of filter chamber. Preferably the filter residue removable apparatus removes filter residue in a non-liquid state, i.e. a non-flowable state for example as a slurry, as paste-like solids or as dry solids. The filter residue removal apparatus may not operate by washing or purging a liquid containing the filter residue.

In some non-claimed embodiments the filter residue removal apparatus may comprise a contact element configured to contact the first surface of the filter medium or to be sufficiently proximate to the first surface of the filter medium to remove residue therefrom. The contact element may be configured to move relative to the filter medium to move filter residue from the surface of the filter medium to the filter residue collection chamber when the moveable member is in the second configuration. The contact element may comprise amongst others: a brush or a flexible element to conform to the surface of the filter medium. The flexible element may comprise a rubber blade, the rubber blade may be shaped with a flexible tip to scrape across the first surface of the filter medium. The first surface of the filter medium is the surface on which filter residue accumulates.

Relative motion between the filter medium and the contact element causes the removal of filter residue and may include: the filter medium remaining static whilst the contact element moves; the contact element remaining static whilst the filter medium moves; or both of the filter medium and the contact element moving at different speeds and/or directions.

The contact element may be actuated to move across the filter medium to move filter residue from the filter medium to the filter collection chamber when the moveable member is in the second configuration. Movement of the contact element may be linear, nonlinear, or the contact element may rotate about an axis. The axis may be the central axis of the filter.

Where the filter medium is planar, the contact element may move linearly from one side of the filter to an opposing side. For example, the contact element may be in a first position at one edge of the filter medium away from the opening during filtration of effluent. After filtration of effluent, the microparticle filter may be placed in the second configuration, then the contact element may be moved across the surface of the filter medium to an opposing edge into a second position which is proximal to, adjacent to or through the opening. The contact element may then return to the first position and the microparticle filter restored to the first configuration.

In embodiments where the filter medium is planar, the contact element may rotate about an axis. The axis may be the central axis of the filter chamber. Alternatively, the axis may be non-central to the filter medium e.g. so that the contact element rotates similar to a windscreen wiper.

Where the filter medium is non-planar i.e. three dimensional, the contact element may move linearly along one dimension of the filter element. Where the filter medium is non-planar, linear motion may be parallel to the central axis of the filter medium. Where the filter medium is non-planar the contact element may rotate about an axis. This axis may be the central axis of the filter medium.

Where the filter medium is planar, the contact element may be linear, rectilinear, curved or parabolic in shape. The contact element may have a width of at least 50% or 75% or 95% the width of the filter medium. The contact element may have a width of at no greater than 125 % or 110% or 100% of the width of the filter medium. The width of the filter medium may be the largest dimension measured on the first surface of the filter medium.

Where the filter medium is cylindrical, the contact element may be a helical contact element. An edge of the helical contact element may contact the first surface of the filter medium. Where the first surface is the interior surface of the cylindrical filter medium, the helical contact element may be positioned within the cylindrical filter medium, and a radially outer edge of the helical contact element may contact the first surface of the cylindrical filter medium. Where the first surface of the cylindrical filter element is the exterior surface of the cylindrical filter medium, the helical contact element may be positioned external to the cylindrical filter medium, and a radially inner edge of the helical contact element may contact the first surface of the cylindrical filter medium. Where the contact element is a helix, the contact element may rotate about central axis of the filter medium.

Alternatively, where the filter medium is cylindrical, the contact element may be circular, elliptical, or annularly shaped to conform with the cylindrical filter medium. Where the first surface is the interior surface of the cylindrical filter medium, the circular, elliptical or annular contact element may be positioned within the interior of the cylindrical filter medium, and a radially outer edge of the contact element may contact the first surface of the cylindrical filter medium. Where the first surface of the cylindrical filter element is the exterior surface of the cylindrical filter medium, an annular contact element may be positioned external to the cylindrical filter medium, and the radially inner edge of the annular contact element may contact first surface of the cylindrical filter medium. Where the contact element is circular, elliptical, or annular, and the filter medium is cylindrical, the contact element may move parallel to the central axis of the cylindrical filter medium. Where the filter medium is a prism, the circular, elliptical or annular contact element may be replaced with an equivalent prismatic shape to conform to the filter medium

Where the filter residue removal apparatus comprises a contact element, the filter residue removal apparatus may also comprise an actuator. The actuator may be configured to move the contact element, and/or may be configured to move the filter medium relative to the contact element.

An actuator of the filter residue removal apparatus may include any actuator operated by a control signal. An actuator of the filter residue removal apparatus may comprise amongst others: hydraulic devices, pneumatic devices, and electromagnetic devices. Non-limiting examples electromagnetic devices include electric linear motion actuators, motors, and electromagnets.

The actuator may provide linear motion or rotary motion. The actuator may move the contact element relative to the filter medium. The actuator may alternatively move the filter medium relative to the contact element. Optionally, the same actuator may also move the moveable member between the first and second configurations.

Where the actuator provides rotary motion, preferably the contact element or the filter medium may be configured to rotate around an axis. Alternatively, where the actuator provides rotary motion, preferably the moveable member may be configured to rotate around the filter axis.

Where the actuator provides linear motion, the contact element or the filter medium may move linearly. Where the actuator provides linear motion, the moveable member may move linearly.

The moveable member and/or the filter medium and/or the contact element may move parallel to the linear motion of the actuator.

In some embodiment's a first part of the actuator motion may move the moveable member from the first configuration to the second configuration, a second part of the actuator motion may move the contact element. Further, the reverse of the actuator motion may move the actuator in reverse and may return the moveable member to the first configuration.

The moveable member and the contact element may be configured to move together. That is, as the contact element moves across the filter medium the moveable member may move at the same time, optionally at the same rate and optionally in the same direction. The moveable member and contact element may be directly connected to move together. The moveable member and contact element may both be moved by the same actuator.

The actuator may comprise a hand operable mechanism operable by a user of the microparticle filter to move the contact element. A hand operable mechanism may include handles, levers, dials, or similar. A hand operable mechanism may be connected to a drive shaft, gears (including worm gears and rack and pinion) or any other mechanical energy transference apparatus, a pneumatic system or hydraulic system. Operation of the hand operable mechanism may cause linear motion of the contact element or rotary motion of the contact element. In some non-claimed embodiments, operating a hand operable mechanism may move the moveable member into the second configuration and may also move a contact element; optionally operating a hand operable mechanism may sequentially move the moveable member into the second configuration, then move the contact element. In some non-claimed embodiments, operating a hand operable mechanism in reverse may also move the contact element in reverse and/or move moveable member into the first configuration. In some non-claimed embodiments, a hand operable mechanism may move linearly to move a moveable member and/or a contact element linearly. Linear motion of the moveable member and/or a contact element may preferably be parallel to the linear motion of the hand operable mechanism. In particular, a handle or a lever may be pulled or pushed to move moveable member and/or the contact element in the same direction.

A hand operable mechanism, e.g. a handle, dial or lever may be rotated to rotate a moveable member and/or contact element. Rotation in one direction may move the moveable member from the first configuration to the second configuration, and or rotate the contact element and/or rotate the filter element relative to the contact element. Rotation in the opposite direction may move the moveable member from the first configuration to the second configuration. Where a hand operable mechanism is rotatable, preferably the moveable member moves between the first and second configuration by rotating around an axis.

In some non-claimed embodiments, a hand operable mechanism may move linearly. Linear movement of a hand operable mechanism may be transferred to linear or rotary motion of the contact element. Similarly, linear movement of a hand operable mechanism move the moveable member between the first and/or second configuration. Specifically, pulling a handle may move the moveable member into the second configuration and move the contact element to empty filter residue into the collection chamber. Pushing of handle may return the contact element to its starting position and/or return the moveable member into the first configuration. Alternatively the actuator may exclude hand operable mechanisms.

In some embodiments, the filter residue removal apparatus may comprise an actuator to rotate the filter medium. The actuator may be configured to rotate the filter medium at a sufficiently high speed to remove the filter residue from the filter chamber by throwing it through the opening when in the second configuration. The actuator may rotate the filter medium around the filter axis.

High speed rotation may be considered as a G force at the perimeter of the filter medium of at least 2G, or at least 5G, or at least 20G, or at least 40G, or at least 100G or at least 175G, or at least 250G or at least 325G or at least 450G. The minute force at the perimeter of the filter medium optionally may not exceed 1 0,000G, or 2000G, or 1 000G, or 500G. For a filter of inner radius r (cm), rotating at R (revolutions per minute (rpm)) and taking g as the acceleration due to gravity at 9.81 m/s$^2$, then:

$$G = 1.118 \times 10^{-5}rR^2$$

In some embodiments, the filter medium may have a number of revolutions per minute when undergoing high speed rotation of at least 100, or at least 800, or at least 1000 or at least 1200 or at least 1400 or at least 1800 or at least 2000. The number of revolutions per minute of the filter medium optionally may not exceed 10,000, or 5000, or 2500, or 2100.

The filter medium may have a radius of at least 30mm, or at least 40 mm, or at least 80mm, or at least 120 mm, or at least 160 mm, or at least 200 mm, or at least 240 mm, or at least 360 mm. The radius of the filter medium optionally may not exceed 2000 mm, or 1000 mm, or 500 mm, or 250 mm.

The filter residue removal apparatus may be adapted to provide high speed rotation of the filter medium within the filter chamber. Such adaptation may include one or more bearings between the filter medium and the filter walls and/or between the filter medium and the inlet or outlet. The bearing(s) may also be fluidly sealed between the interior of the filter chamber and the exterior. The bearing(s) may be an annular bearing that allows effluent or filtered effluent to pass through the centre of the bearing. The filter residue removal apparatus may also be adapted by comprising an actuator, (e.g. a motor), that is capable of providing high speed rotation of the filter element.

In some embodiments, where the filter medium rotates to remove the filter residue from the filter chamber by throwing it, the filter chamber may additionally rotate with the filter medium. In these embodiments, the same actuator may additionally rotate the filter chamber as well as the filter element. Where the filter chamber is rotated along with the filter medium, the bearings may be located between the rotating filter chamber walls and a static inlet and/or outlet.

Where the filter medium rotates to remove the filter residue, the filter may also be operable to pump effluent through the filter chamber. To pump effluent through the chamber an impellor or impellor blades may be rotatably mounted in the filter chamber and optionally may be connected to the filter medium, or otherwise arranged to rotate with the filter medium. Thus, the filter chamber optionally comprises an impellor rotatably mounted therein. Where an impellor is arranged to rotate with the filter medium, the filter medium may rotate at a first speed in the first configuration to pump effluent and rotate at a second speed in the second configuration to remove filter residue. The first speed and the second speed may be the same speed, or optionally, the second speed may be higher than the first speed. The second speed of rotation may rotate as described above for high speed rotation. Optionally, the filter medium may remain static during filtration in the first configuration and rotate in the second configuration to remove filter residue.

The impellor or impellor blades may be positioned downstream of the filter medium and/or upstream of the filter medium. The impellor or impellor blades may be configured to rotate with the filter medium, and/or the filter support, and/or the moveable member, and/or the pipe. Optionally, the impellor or impellor blades may be positioned adjacent to and radially inwards of the outlet. In some embodiments comprising a pipe inside the filter chamber, the pipe may pass through the centre of the impellor and optionally the pipe may rotate with the impellor. Optionally the impellor may be integrally formed with or connected the filter support and/or the pipe.

Where the filter medium rotates to remove the filter residue, the filter medium may be planar and perpendicular to the axis of rotation. In some embodiments, the filter medium may comprise a plurality of planar filter elements. The filter elements may optionally be arranged perpendicular to and coincident with the central axis. The filter elements may optionally be spaced at regular intervals along the central axis. The filter medium or each filter element of the filter medium may comprise a filter support that supports each filter element or the filter medium. The filter support may comprise one or more channels that separate filtered effluent from unfiltered effluent and channel the filtered effluent to the outlet. The channels from one or more filter supports may connect to a common drain that extends to the outlet. The channels may be positioned radially outwards of the filter elements. The filter elements may be arranged so that un-filtered effluent is supplied to the each of the filter elements, i.e. effluent is supplied in parallel to each filter element rather than in sequence.

The filter medium may be retained in a three-dimensional shape by the filter support. The filter support may be configured to retain the filter medium in a three-dimensional shape including but not limited to a frustrum, cone, cylinder, or pyramid shape. The filter support may be configured to support the filter medium so that the first surface faces radially outwards from the central axis.

The filter support may comprise one or more blades, fins or other surfaces configured to rotate liquid in the filter chamber. Thus, the blades fins or other surfaces may function as an impellor when the filter support is rotated.

The filter support may comprise a disc or other surface that cooperates with an end wall and/or sidewall of the moveable member. The disc may help to align the moveable member when in the first configuration and/or to scrape an inner surface of the moveable member when moving into the second configuration.

In a particular embodiment, the moveable member, the opening and optionally the collection chamber may extend around the perimeter of the filter chamber. The moveable member may be cylindrical and may move vertically between the first and second configurations. The movable member may be annular, in particular where the moveable member is cylindrical or conical. The opening may be defined by the space between an edge of the moveable member and an edge of the filter chamber when the moveable member is in the second configuration. The microparticle filter may comprise a linear actuator to move the moveable member between the first and second configurations. In a particular embodiment, the filter chamber may rotate with the filter medium. Optionally the moveable member may rotate with the filter medium.

In a particular embodiment, the inlet may be positioned coincident with the central axis of the filter medium and the outlet may optionally be positioned radially outwards of the central axis. Optionally the outlet may be further radially outwards from the central axis than the inlet. Optionally the outlet may comprise a plurality of channels positioned radially outwards of the central axis of the filter medium, optionally the plurality of channels may be spaced evenly in the circumferential direction.

In a particular embodiment, the filter medium may comprise a plurality of planar filter elements. Each filter element may be positioned on a filter support, and the filter support may separate filtered effluent from unfiltered effluent. Each filter support may comprise one or more individual drains, and the one or more individual drains may optionally connect to a plurality of channels or to a common drain which extends to the outlet. The plurality of filter elements may be arranged to receive unfiltered effluent from the inlet.

The filter residue collection chamber may be or may comprise a portion that is slidably removable the microparticle filter. For example, the filter residue collection chamber may be or may comprise a slidable drawer. The filter residue collection chamber or slidable portion thereof may slide radially outwards from filter axis to be removed.

Where the individual filter elements are two dimensional, the individual filter elements attached to the filter support may be of equal size and may be are equally spaced.

A particularly preferred embodiment arrangement for two dimensional filter elements on a filter support is to have each individual filter element combined with a separate filter support. The resulting arrangement being a stack of spaced two dimensional filter elements. Preferably the arrangement where the filter support and the filter elements in combination are substantially disc-shaped with or without cut-out portions between each adjacent filter support and the filter elements unit at the circumference of the disc. In this arrangement each individual filter element and the support may be referred to as a filter layer.

The plurality of planar filter elements when incorporated into a filter may be arranged to receive effluent in parallel from the inlet.

The filter residue removal apparatus comprises a rotary actuator to rotate the filter medium about a central axis to centrifugally move residue to the filter residue collection chamber.

In some non-claimed embodiments the filter residue removal apparatus may comprise air jet apparatus to direct a jet of air at the filter residue to move the filter residue into the filter residue collection chamber. Air jet apparatus may comprise an air nozzle, a source of pressurised air and an air conduit to deliver pressurised air from the source to the air nozzle. The air nozzle may be positioned at an acute angle to the first side of filter medium to direct air across the first surface towards the opening. Alternatively, the air nozzle may be positioned on the second side of the filter medium to direct air through the filter medium towards the opening. The source of pressurised air may comprise an air compressor which optionally may be powered by a motor of a textile treatment machine.

The filter residue removal apparatus may be operable to remove filter residue when the filter chamber has been emptied of liquid effluent. That is to say the filter residue removal apparatus may be operable to move the filter residue when the filter residue is in a non-flowable state. A non-flowable state may be considered, to be a state where the filter residue has a high quantity of solids compared to liquid, i.e. the residue may resemble a slurry, paste-like or damp particulate material. A high quantity of solids compared to liquid may be considered by be the filter residue comprising at least 50% by mass of solids, at least 75% by mass of solids or at least 90% by mass of solids, and optionally up to 98% by mass of solids, or up to 100% by mass of solids.

The filter residue removal apparatus may operable to remove filter residue when the filter residue has been dewatered. Dewatered filter residue may comprise a filter residue where the water content of the filter residue has been reduced from a suspension or surplus of water until the filter residue is in the non-flowable state. Dewatered filter residue may optionally comprise filter residue where the water content has been reduced until the filter residue comprises high quantity of solids compared to liquid as defined above.

Dewatering may be achieved by draining water from the filter chamber by the influence of gravity, by the application of positive or negative pressure, by the circulation of air, by the application of heat, infrared or other radiation, by the application of a centrifugal force or any combination of these methods. Dewatering apparatus may comprise any apparatus necessary to achieve these functions. Exemplary dewatering apparatus may comprise any of: a filter medium arranged vertically higher than the outlet so that water can be drained from the filter chamber under the influence of gravity; air circulation means, for example, a fan; suction means, for example a vacuum pump; heating means, for example, a heating element; spinning means, for example a rotatable filer medium; press means, for example an actuated press to press filter residue against the first surface of the filter medium. Dewatering may also comprise allowing a drying period from the completion of filtration of the effluent before removal of filter residue. A drying period may be no less than 5 seconds, 30 seconds, 1 minute, 5 minutes, 20 minutes, 45 minutes, 1 hour, 5 hours, 12 hours or 24 hours. Dewatering may be performed within the filter chamber.

**Filter Residue Collection Chamber**

The filter residue collection chamber may be positioned laterally with respect to the filter medium. For example, a single collection chamber may be positioned radially outwards from the filter medium and may extend for only a small portion around the perimeter of the filter chamber. Alternatively, the filter residue collection chamber may be positioned radially outwards of the filter medium and may surround a portion of or substantially all of the perimeter of the filter chamber or opening.

The filter residue collection chamber may be positioned and/or orientated so that filter residue enters the filter residue collection chamber by moving vertically downwards (e.g. under the influence of gravity). In some embodiments, the filter residue collection chamber positioned and/or orientated so that filter residue enters the filter chamber by moving horizontally through the opening.

The filter residue collection chamber may be formed in a range of different shapes. For example, the filter residue collection chamber may be an open sided box or, an open sided box may have one face of the box omitted for access the interior of the box e.g. a cuboidal box would have five faces and one open face. In other embodiments, the filter residue collection chamber may be shaped as a trough, that is two opposed sides, a bottom portion extending there between and open face at the top. A trough shape may be elongate or annular. When viewed in a cross section, the filter residue collection chamber may comprise a U- shape a V- shape or may comprise three perpendicularly arranged walls for example. Where the filter residue collection chamber comprises an open face to access the interior, the open face may be positioned horizontally. In some embodiments, the open face of the filter residue collection chamber may be perpendicular with or parallel to the opening, depending on the configuration of the filter chamber.

The filter residue chamber may be made from engineering materials and may comprise a polymer, a metal, or a ceramic material. Non limiting examples of suitable metals include aluminium, titanium, and alloys for example steel (including stainless steel). Polymers may include thermoset and thermoplastic polymers. Non-limiting examples of suitable polymers include: Polyether ether ketone (PEEK), Poly(methyl methacrylate) (PMMA), Polyethylene terephthalate (PET), Polyphenylene sulfide (PPS), Poly(p-phenylene oxide) (PPO), Acrylonitrile butadiene styrene (ABS), Polybutylene terephthalate PBT, Polyether ketones (PEK), polyamides, polyimides, polyethylene, polypropylene, polycarbonates, polyacetals and polysulphones.

The filter residue collection chamber may be removable from the microparticle filter to assist a user to empty residue therefrom. Where the microparticle filter is comprised as part of a textile treatment apparatus the filter residue collection chamber may be removable from the microparticle filter and the textile treatment apparatus. The filter residue apparatus may comprise a detachable connection to removably connect the filter residue collection chamber to the microparticle filter. Non limiting examples of detachable connections include latches, such as toggle latches and depressible tongue latches, quick release mechanisms tongue and groove arrangements, amongst others. Optionally, the filter residue collection chamber may comprise a portion that is detachable from the remainder of the filter residue collection chamber, for example, a drawer or tray that can be removed for emptying.

The filter residue collection chamber may have an interior volume of sufficient size to contain the filtered residue from a plurality of wash loads before emptying is required. The filter residue collection chamber may have an interior volume of at least 0.1 L or 0.2 L or 0.5 L, or 1 L, or 5 L, or 10 L, or 20 L, or 50 L, or 100 L, or 200 L. The interior volume may not exceed 500 L, or 200 L, or 50 L, or 10 L, or 5 L, or 1 L, or 0.5 L. Filter residue collection chamber may have a volume sufficient to contain filter residue from at least 1, 2, 5, 10, 15, 20 25, 50, 75, 100 or 200 treatment cycles before emptying is required. In some embodiments, the residue collection chamber has a volume that can contain filter residue from no more than 200, 100, 75, 50, or 25 treatment cycles before emptying is required. A treatment cycle may be considered to be one operation of a textile treatment machine from placing the textiles in the machine to the completion of the treatment. For example, a washing machine may be programmed to perform a number of different wash cycles. Each complete wash cycle may be considered a treatment cycle as defined herein.

The filter residue collection chamber may comprise a collection wall aligned parallel to the central axis of the filter medium. The collection wall may be arranged radially outwards of the opening. Where the opening is parallel to the filter axis, the collection wall may extend parallel to the filter axis also and extend to at least the same length in the filter axis direction as the opening. The collection wall may be integral with the wall of the filter residue collection. The collection wall may be incorporated into the collection chamber or may be positioned adjacent thereto. Optionally the collection wall and/or the filter residue collection chamber may be incorporated into a larger housing enclosing the filter chamber.

The collection wall may be sized and/or positioned so that residue exiting the filter chamber via the opening hits the collection wall. The collection wall may be positioned opposite to the opening. The collection wall may be the same size as the opening or greater. The residue collection chamber may be arranged so that residue can fall from collection wall onto the residue storage portion under influence of gravity. The residue collection chamber may comprise a residue storage portion between the moveable member and the collection wall. The residue storage portion may be where residue is accumulated after contact with the collection wall.

The moveable member may comprise a transfer element on a radially outer surface of the moveable member. The transfer element may be configured to transfer filter residue on the collection wall to the residue storage portion when the movable member moves between configurations, and optionally specifically when it moves from the second configuration to the first configuration. The transfer element may push residue accumulated on the collection walls downwards into the residue storage portion when the moveable member moves downward from the second configuration to the first configuration. The transfer element may comprise amongst others, a brush, or a flexible element to conform to the collection wall. The flexible element may comprise a flexible blade, the flexible blade may be shaped with a flexible tip to contact the collection wall and may optionally comprise or consist of rubber.

The filter residue may additionally undergo a subsequent dewatering process in the filter residue collection chamber. The filter residue container may also comprise any dewatering apparatus as described for the filter chamber. Optionally the filter residue removal apparatus may comprise a secondary filter medium and optionally a drain connection to the outlet of the filter chamber.

**Filter Medium**

The filter medium may comprise a porous material. The pores of the filter medium may have an average largest dimension that is at least about 1 $\mu$m, at least about 2 $\mu$m, at least about 5 $\mu$m, at least about 10 $\mu$m, at least about 20 $\mu$m, at least about 30 $\mu$m, at least about 40 $\mu$m, at least about 50 $\mu$m, at least about 60 $\mu$m, or at least about 70 $\mu$m. Typically, the pores of the filter medium have an average largest dimension of no more than about 1 mm, or no more than about 500 $\mu$m, or no more than about 250 $\mu$m, or no more than about 100 $\mu$m, or no more than about 80 $\mu$m, or no more than about 70 $\mu$m, or no more than about 60 $\mu$m. Typically, the average largest dimension of the pores is from about 60 $\mu$m to about 100 $\mu$m. The average is an arithmetic average.

The microparticles in the effluent may be or may comprise microfibres. The microfibres may have a longest linear dimension of greater than about 1 $\mu$m and typically no longer than about 5 $\mu$m, typically no longer than about 100 $\mu$m, or typically less than about 1 mm. The above perforation dimensions provide advantageous filtration efficiencies for such fibres.

Typically, at least about 50wt%, at least about 60wt%, at least about 70wt%, at least about 80wt%, at least about 90wt%, at least about 95wt%, or at least about 99wt% of solid material in the effluent is prevented from passing through the filter.

The weight percentage of solid material that a filter is able to prevent from being passed through may be readily measured, for example, by measuring the mass of the filter and then mixing a known mass of solid material with a known volume of water to make an effluent feed. The filter is then operated to filter the effluent feed and remove the solid material from the feed. By removing the filter and remeasuring its mass at the end of the filtration, the mass of the collected solid can be calculated and, thus, the percentage of solid collected compared to the mass of solid mixed with water to make a feed can also be calculated.

Typically, solid material having a maximum dimension of greater than about 2 mm, of greater than about 1 mm, of greater than about 500 $\mu$m, of greater than about 200 $\mu$m, of greater than about 100 $\mu$m, of greater than about 50 $\mu$m, of greater than about 32 $\mu$m, of greater than about 10 $\mu$m, of greater than about 5 $\mu$m, or of greater than about 1 $\mu$m is prevented from passing through the filter.

The filter medium may comprise a mesh, a perforated sheet, woven or non-woven fibre sheet, cloth or felt, or a porous material, amongst or any known filtration material. Where the filter medium comprises a mesh, the mesh may comprise a network of wire or thread. The network of wire or thread may be a non-woven or woven form or may comprise a plurality of fibrous layers. The fibrous layers may optionally comprise two or more layers of fibres aligned in parallel with each layer in different orientations. The pores of the mesh may be formed from the different spacings between the wire or thread.

Where the filter medium comprises a perforated sheet, the pores may be the perforations. A perforated sheet may include a metallic or polymeric material where the material is, punched, punctured, cut, slit, or treated by any known method to introduce perforations into the material.

Where the filter medium comprises a porous material, the porous material may be a porous ceramic, a laminar surface with pores (e.g. a porous polymer membrane) or any other material that is inherently porous.

The filter medium may comprise a single layer which preferably has pores with an average size described above.

The filter medium may have a first surface defined as the surface through which the effluent enters the filter medium to be filtered. Filter residue will typically accumulate on the first surface during filtration. The filter medium may have a second surface defined as the surface through which the filtered effluent leaves the filter medium after filtration. It will be appreciated that preferably all or substantially all of the effluent passes through the filter medium and is thereby filtered.

The filter medium may be planar. A planar filter medium may be considered to be a filter medium with a shape that extends predominantly in one plane, preferably it may be considered a filter medium that is substantially flat or two dimensional in shape. A planar filter medium itself may also optionally be corrugated, convex or concave on the first or second surfaces, but with an overall planar shape. A planar filter medium may be substantially circular, oval, quadrilateral, or polygonal. A planar filter medium may have an aspect ratio defined by the longest linear length of the medium to its thickness of greater than 5:1, or greater than 10:1. The filter medium may be three dimensional. A three dimensional filter medium may be considered to be any non-planar filter medium. A three dimensional filter medium may include but not be limited to a filter medium in the shape of a paraboloid, hemispheroid, hemi-ellipsoid, pyramid, cone, frustrum, cylinder, or prism. A three dimensional filter medium may extend parallel to a central axis of the filter medium that is normal to a base plane of the filter medium. For example, where the filter medium is cylindrical, the central axis will pass down the centre of the cylinder through and the centre of base; where the filter is a pyramidal, the central axis will pass through the apex of the pyramid and the centre of the pyramid base. The filter medium may have a rotational symmetry of order of two or greater about the central axis. The base plane, for example is the plane coincident with the base of the filter shape; e.g. where the filter is a cylinder, frustrum, cone, hemi-spheroid or frustrum, the base plane will be coincident with the circular base of the aforementioned shape. Similarly, where the shape is a prism or pyramid, the base plane will be coincident with the polygonal base, where the shape is a hemi-ellipsoid or an elliptic cylinder, the base plane will be coincident with the ellipsoidal base for example. The axis in which the three dimensional filter extends may be parallel with and/or coincident with the filter axis. The axis in which the three dimensional filter is extends may be vertically or horizontally aligned. A two dimensional filter medium may also comprise a filter axis, defined as an axis perpendicular to the plane of the two dimensional filter and passing through the centre of mass of the filter medium assuming the filter medium to be a homogenous body. Where the filter medium is a three dimensional shape, the first surface of the filter medium faces radially inwards from the central axis or preferably outwards from the central axis.

Where a filter medium rotates, it will typically rotate about the filter axis of the filter medium.

In embodiments where the filter medium extends parallel to a filter axis of the filter medium, the filter medium may have a first surface facing the central axis and a second surface facing outwards from the filter axis; i.e. the residue collects on an internal or inner surface of the filter medium (i.e. the first surface of the filter medium is the interior surface). Alternatively, the filter medium may have a first surface facing outwards from the filter axis and a second surface facing inwards towards the filter axis; i.e. the residue collects on an external or outwards surface of the filter medium. The filter residue removal may comprise apparatus that contacts the first surface of the filter medium. The filter residue removal apparatus may comprise a contact element, the contact element may optionally conform to the first surface of the filter medium.

Where filter medium is three dimensional and elongate, such as a prism or cylinder, the filter medium may comprise a non-porous end wall at one end. Where filter medium is three dimensional, the filter medium may comprise an open end fluidly connected to the outlet or inlet.

The filter medium may approximate an enclosed volume around a portion of the filter axis, and the inlet may be configured to introduce effluent into the enclosed volume. The outlet may be configured to remove filtered effluent from external to the enclosed volume. Alternatively, the outlet may be configured to introduce effluent into the enclosed volume, and the inlet may be configured to remove filtered effluent from external to the enclosed volume.

The filter medium may be attached to a filter support. The filter support is typically a rigid structure which can be made from thermoplastics, thermosets, metals, alloys, ceramics, and the like. More preferably a plurality of filter elements are attached to a filter support to form a filter medium. For example, a filter medium in the shape of a hexagonal prism may comprise a filter support in the shape of a hexagonal prism with six sheets of filter material applied to the six side faces. The six sheets of filter material are examples of filter elements as used herein. Filter elements may refer to filtering subunits of a filter medium.

The filter medium combined with the filter support may be substantially planar and more may take the shape of a disc. Where the filter medium is a three dimensional filter medium, the filter support may provide the structure of the overall shape of the three dimensional filter medium. For example, in the case of the cylindrical filter, the filter support may comprise two circular or annular rigid members separated by circumferentially spaced parallel members; in the case of a hexagonal prism filter, the filter support may comprise two hexagonal rigid members separated by six rigid members at the vertices. The filter support may provide the overall shape of the filter medium and may also provide a structure to which a filter material is applied to form the filter medium.

A filter medium may comprise a plurality of filter elements or the filter medium may be a single filter element. An individual filter element may take the same form as any filter medium defined herein. Each individual filter element may be three dimensional or two dimensional and described above in relation to a filter medium. An individual filter element may be considered to be a subunit of a filter medium comprising a plurality of filter elements.

A filter support may provide support for a plurality of individual filter elements. Where the individual filter elements are two dimensional the filter support may hold the filter elements in parallel spaced relationship, e.g. a stack of planar filter elements for example. Where the individual filter elements are two dimensional, the filter support may hold the filter elements spaced along a common axis. The individual filter elements may be aligned perpendicular to a common axis. The common axis may be parallel to or the same as the central axis of the filter medium. Where the individual filter elements are three dimensional, the filter support may hold the filter elements in a concentric or nested relationship, e.g. concentric cylinders. Preferably the three dimensional individual filter elements are arranged concentrically or coaxially along a common axis.

The filter medium is rotatably mounted within the filter chamber. Rotation of the filter medium is around the central axis of the filter medium. The filter may be rotatably mounted as part of the filter residue removal apparatus. Alternatively, or additionally, a filter may be rotatably mounted to perform a dewatering function and/or to perform a pumping function. A rotatable mounting may comprise a sealed bearing. A sealed bearing may be present between the filter medium and a portion of the chamber walls. Alternatively, a filter medium may be mounted so that a portion of the inlet rotates with the filter medium, or alternatively so that a portion of the outlet rotates with the filter medium. The sealed bearing may therefore be present between a portion of the inlet and chamber walls, or between a portion of the outlet and the chamber walls. Thus, a portion of the inlet, or a portion of the outlet may rotate with the filter medium. The sealed bearing may be annular to allow liquid to pass through the centre of the sealed bearing, be it through the inlet/outlet or otherwise. Where the filter medium is two dimensional, the sealed bearing may extend around the circumference of the two dimensional filter medium. Alternatively, a two dimensional filter medium may comprise a filter support and may channel effluent to or from the filter medium to the inlet or outlet. The sealed bearing may be located around a portion to filter support.

The filter medium may be moveable against the contact element to move filter residue from the filter medium to the filter collection chamber when the moveable member is in the second configuration. The filter medium may rotate against the contact element to move filter residue from the filter medium radially outwards from the centre of rotation of the filter medium.

The filter medium may be removable from the filter chamber to assist cleaning of the filter medium by a user. This the filter medium may have a detachable connection to the filter chamber, or a portion of the filter medium may comprise a detachable connection.

The filter chamber may comprise a baffle located therein. A baffle may be considered to be a surface or member in the filter chamber that is configured to disrupt fluid flow adjacent to the filter medium. The baffle may create eddies or turbulent flow structures in the effluent liquid adjacent to the filter medium that reduces accumulation of filter residue on the filter medium. The baffle may be rigidly connected to the chamber walls, such that it does not rotate, thus it may remain static whilst the filter medium rotates.

The baffle may be located adjacent to the filter medium. Optionally, baffle may be located proximal to the second surface of the filter medium. Alternatively, the baffle may be located proximal to the first surface of the filter medium. Proximal in this context may mean that the baffle is positioned at a distance such that the separation from the surface of the filter medium is no more than 40mm, or 20mm, or 1 0mm, or 7mm, or 5mm, or 3mm.

The microparticle filter of the first aspect may be usable with one or more than one textile treatment apparatus.

According to a second aspect of the invention, there is provided a textile treatment apparatus comprising the microparticle filter according to the first aspect.

The textile treatment apparatus may be any apparatus suitable for treating textiles. In particular, the textile treatment apparatus may be suitable for washing textiles. In particular, the textiles may be cellulose containing textiles. In particular, the textiles may comprise garments.

The textile treatment apparatus may be adapted for washing textiles with a treatment formulation comprising a liquid, the textile treatment apparatus comprising a drum for rotating the textiles and the treatment formulation, a drive means for rotating the drum and a microparticle filter according to the first aspect.

Preferably, the textile treatment apparatus is a washing machine.

A textile treatment machine may include machines adapted for colouring (e.g. dyeing), stonewashing, abrading, and applying surface treatments to garments or textiles used in the production of garments. A textile treatment machine may have a capacity permitting no more than 15 Kg, or 25Kg, or 50Kg, or 100 Kg, or 500 Kg of dry textiles to be treated at any given time. The drum volume of a textile treatment machine may be up to 100L, 500L, 1000L or 5000L.

The textile treatment machine may be a washing machine and may include a domestic washing machine or a commercial washing machine. A domestic washing machine may have a capacity permitting no more than 15 Kg of dry textiles to be washed at any given time. Typically, a domestic washing machine is either a front loading machine or a top loading washing machine. Often domestic washing machines are about 60 cm wide, 60 cm deep and about 85 cm tall. The drum of a domestic washing machine preferably has a capacity of at least 1 litre and more preferably at least 10 litres and preferably no more than 150 litres, or no more than 120 litres.

A commercial washing machine may have a capacity greater than 15 Kg of dry textiles to be washed at any given time. The drum of the textile treatment apparatus may have a capacity of more than 120 litres, more than 150 litres more than 200 litres, more than 400 litres, more than 900 litres or more than 1400 litres. Drums of such larger dimensions are especially suitable for commercial or industrial applications. The drum may have any upper limit to its capacity, preferably the drum has a capacity of no more than 20,000 litres or no more than 10,000 litres.

The drive means for rotating the drum may be a motor and preferably an electric motor.

The liquid is preferably aqueous. Preferably the liquid in the treatment formulation is as described for the feed liquid.

The liquid may comprise one or more treatment additives selected from dyes, pigments, surfactants, enzymes, acids, bases, buffering agents, oxidizing agents, builders, biocides, and anti-staining agents.

The textile treatment apparatus is preferably electrically connected to the microparticle filter according to the first aspect of the present invention.

The textile treatment apparatus may comprise a controller unit which is preferably connected to the microparticle filter according to the first aspect of the present invention.

The controller in the textile treatment apparatus may directly control the operation of the moveable member by controlling an actuator in the microparticle filter. Thus, a controller in the textile treatment apparatus may comprise memory loaded with a programme which when operated by a processor controls an actuator in the microparticle filter. Similarly, one or more valves may be operated by the controller. In this way the microparticle filter may be under the direct control of the textile treatment apparatus.

Alternatively or additionally, the microparticle filter may comprise a controller. The controller in the microparticle filter may sense or be sent information relating to the actions of the controller in the textile treatment apparatus and the controller of the microparticle filter has memory loaded with a programme which when operated by a processor controls actuators of in the microparticle filter. In this way the microparticle filter is not under the direct control of the textile treatment apparatus but instead it "has a knowledge" of what the textile treatment apparatus is doing and can respond accordingly. As an example, the controller in the microparticle filter may sense that the waste valve in the textile treatment apparatus has been opened and/or that a waste pump has been activated and it may then respond by powering the actuator(s) of the microparticle filter so as to begin filtration with the microparticle filter. The memory of the microparticle filter may be comprised as part of the microparticle filter or may be accessible via wireless communication.

The controller may be configured to operate the filter residue removal apparatus to remove the cellulose containing residue from the filter chamber to a filter residue collection chamber via the opening in the filter chamber, thus operation via a controller may comprise automatic operation. Automatic operation of the microparticle filter may comprise operating the actuator(s) of the microparticle filter necessary to remove the cellulose containing residue from the filter chamber without requiring manual emptying by a user. That is, a control signal may be used to operate the actuator(s). For automatic operation, the controller may be configured to control an actuator to move the moveable member between the first and second configurations, and/or control an actuator to operate the filter residue removal apparatus.

For example, a controller may generate control signals to an actuator(s) to open the filter chamber to provide access from the filter chamber to the filter residue collection chamber; to operate a filter residue removal apparatus to remove the microparticle containing residue from the filter chamber to a filter residue collection chamber via the opening in the filter chamber; and to close the filter chamber.

The microparticle filter and/or textile treatment apparatus may comprise sensors (for example, pressure or fluid sensors in the drain outlet of the treatment apparatus or in the filter chamber and/or sensors to determine the volume of effluent passed to the filter). The controller may be configured automatically operate the microparticle filter based on an input from such sensors. Alternatively, or in addition to, the controller may be configured to operate the microparticle filter after a condition pertaining to a wash cycle is identified (e.g. completion of a wash cycle).

The textile treatment apparatus may comprise: a tub in which the drum is rotatably mounted, said drum having side walls and said side walls comprising one or more apertures configured to permit said treatment formulation to exit the drum; an access means moveable between an open position wherein the at least one textile can be placed in the drum and a closed position wherein the apparatus is substantially sealed; a collector, wherein said collector is located beneath said drum and is configured to collect said treatment formulation that exits the drum; a microparticle filter as disclosed herein; and a first flow pathway between the collector and the inlet of the microparticle filter.

The outlet of the microparticle filter may be fluidly connected to the drum. In this way, liquid that has passed through the filter may be returned to the drum. The outlet of the microparticle filter may be fluidly connected to a drain. Optionally, the outlet of the microparticle filter may be fluidly connected to a drain and to the drum. Optionally, the textile treatment apparatus comprises a control valve configured such that liquid filtrate that exits the outlet of the microparticle filter is selectively recirculated to the drum or sent to a drain.

The textile treatment apparatus may further comprise a recirculation means for recirculating the treatment formulation from said collector to said drum, wherein the microparticle filter is comprised in the recirculation means. In this way, the filter filters treatment formulation during its recirculation from the collector to the drum. Typically, the recirculation means comprises a pump and ducting which connects the collector and the drum.

The textile treatment apparatus may comprise a second filter or trap positioned such that treatment formulation passes through the second filter prior to entering the inlet of the microparticle filter. The second filter or trap may be a coarse filter (e.g. a coin trap) to prevent large pieces or items of solid material from entering the filter, for example, coins, stones, or other items from pockets when washing laundry.

The textile treatment apparatus may be configured such that the treating of the textile with the treatment formulation is able to occur in the presence of solid particulate cleaning material. For example, the apparatus may be configured such that the solid particulate cleaning material is able to exit the drum through the apertures and is collected in the collector. When configured in this way, preferably the textile treatment apparatus comprises a recirculation means for recirculating the solid particulate material and said treatment formulation from the collector to the drum.

Typically, the recirculation means comprises a pipe or duct between the collector and the drum, the pipe or duct may be described as a "flow pathway pipe".

Preferably, the recirculation means comprises a first pump. The first pump assists in transferring solid particulate material that exits the outlet of the collector back to the drum. For the first pump to operate properly, at least a portion of the treatment formulation in the collector also exits the collector with said solid particulate cleaning material and enters the recirculation means and is thereby recirculated to the drum. Preferably, the recirculation means comprises a separator. The recirculation means separator functions to separate solid particulate cleaning material from the treatment formulation that has been recirculated from the collector so that substantially only solid particulate cleaning material re-enters the drum.

Treatment formulation that is separated by the recirculation means separator is preferably directed back to the collector. The treatment formulation may be returned to the collector via a drain located in the access means, between the access means and the drum and/or via apertures in the drum or lifters. Alternatively, or additionally, the treatment formulation may be returned to the collector via a pipe, wherein the pipe does not pass through the access means.

Where the textile treatment apparatus comprises recirculation means for recirculating solid particulate material, then the microparticle filter is preferably positioned in the recirculation means between the separator and the collector, such that treatment formulation that is separated by the recirculation means separator from the solid particulate cleaning material enters the microparticle filter via the inlet of the microparticle filter. Filtered treatment formulation that exits the outlet of the microparticle filter is directed to the collector. In this way, at least a portion of residual solid material that has passed through the recirculation means separator can be removed from the treatment formulation by the microparticle filter. Preferably, substantially all residual solid material in the treatment formulation is removed by the microparticle filter. Repeated recirculation of treatment formulation through the microparticle filter can result in "polishing" of the treatment formulation.

Alternatively, where the textile treatment apparatus comprises recirculation means for recirculating the treatment formulation from said collector to said drum, the microparticle filter may be positioned between the collector and a drain. In this way, at least a portion of residual solid material in the treatment formulation is removed before disposal of the treatment formulation. Thus, reducing the amount of solid material entering the drain.

In an alternative arrangement of the textile treatment apparatus, in which the textile treatment apparatus is configured such that the treating of the textile with the treatment formulation is able to occur in the presence of solid particulate cleaning material, solid particulate cleaning material is unable to exit the drum through the apertures. Where the solid particulate cleaning material is unable to exit the drum through the apertures, the apparatus preferably comprises an in-drum storage for the solid particulate material.

Where the treating of the textile includes treating with solid particulate cleaning material, the solid particulate material preferably comprises a multiplicity of particles. The particles of the solid particulate material may be polymeric and/or non-polymeric particles. The particles may have a largest linear dimension of from 0.1 mm to 1 00mm, or from 1 mm to 10mm.

In an alternative arrangement of the textile treatment apparatus, in which the apparatus is configured such that the treating of the substrate with the treatment formulation is able to occur in the presence of solid particulate material, solid particulate material is unable to exit the drum through the apertures. Where the solid particulate material is unable to exit the drum through the apertures, the apparatus preferably comprises an in-drum storage for the solid particulate material.

Typically, said in-drum storage comprises at least one compartment comprising a flow path facilitating ingress and egress of fluids and solid particulate material. The storage means may comprise a plurality of said compartments. Said compartment or plurality of compartments may be located on at least one inner surface of said drum. Typically, a plurality of compartments are located, typically at equidistant intervals, on the inner circumferential surface of said drum. Alternatively, or in addition, said plurality of compartments may be located on the inner end surface of said drum.

The in-drum storage may be adapted such that ingress or egress of fluids and solid particulate material may be controlled by the direction of rotation of said drum. Thus, where said in-drum storage comprises at least one compartment comprising a flow path facilitating ingress and egress of fluids and solid particulate material, said ingress and egress is dependent on said direction of rotation.

The in-drum storage may comprise a plurality of compartments located at equidistant intervals on the inner circumferential surface of said drum. Typically, the drum may comprise from 3 to 10, preferably 4, of the compartments and these compartments may additionally function as, or form part of, a plurality of "lifters". Lifters encourage circulation and agitation of the contents of the drum, that is, the substrate, treatment formulation and solid particulate material, within the drum during rotation of the drum. In this way, the lifters are adapted to store said solid particulate material and to facilitate controlled flow of solid particulate material between said lifter/in-drum storage and the inside of the drum. Typically, the in-drum storage is a compartment of essentially equal length to said lifter, and is adapted so as to provide a flow path from the compartment through an aperture in said lifter to the inside of said drum. Thus, in operation, for a given direction of rotation of said drum, particulate material present on the inner surface of said drum enters the lifters through the aperture and transports to the compartment housed therein via the flow path. For the opposite direction of rotation of said drum, particulate material exits the compartment via the same pathway and enters the drum. The dimensions of the apertures are selected in line with the dimensions of the solid particulate material, so as to allow efficient ingress and egress thereof.

Alternatively, the in-drum storage may be located on the inner end surface of said drum. The in-drum storage typically comprises compartments arranged in a circular array about the central axis of said drum and each compartment has a relatively large cross sectional area and small overall depth, such that the arrangement of compartments does not significantly adversely impact the internal volume of the drum.

In operation, during a typical cycle for cleaning of a soiled substrate in a textile treatment apparatus wherein said in-drum storage is comprised in said lifters, a substrate is first placed into said drum. The appropriate mass of solid particulate material is contained within said in-drum storage before commencement of the treating cycle. Then, the necessary amount of treatment formulation is added to said drum via a delivery means or an addition port. Then the drum commences rotation in a pre-determined direction. Thus, by means of drum rotation and gravity, solid particulate material moves relative to said in-drum storage such that, for each rotation of said cylindrical cage, a volume of solid particulate material is dispensed from said in-drum storage into the drum until the in-drum storage has been emptied. Thereafter, the direction of rotation of the drum is, for the most part, maintained for the duration of the treatment operation. On occasions during said substrate treatment, the direction of rotation of the drum be reversed for short periods of time (typically less than 1 minute), in order to improve substrate treatment, principally by untangling substrates from each other.

Thereafter, on completion of the substrate treatment, rotation of said drum is typically reversed. Thus, by means of drum rotation and gravity, said solid particulate material separates from the substrate and enters the in-drum storage such that, for each rotation of said drum, a volume of solid particulate material is collected from the drum into the in-drum storage. This process continues until such time that all the solid particulate material has been separated from the substrate and collected by said in-drum storage.

Typically, the tub surrounds the drum. The tub may surround the drum, preferably wherein the tub and the drum are substantially concentric. Preferably, the walls of the tub are unperforated but have disposed therein one or more inlets and/or one or more outlets suitable for passage of a treatment formulation and/or components of the treatment formulation and/or any solid particulate material used in the treatment into and out of the tub. Thus, the tub is suitably water-tight, permitting ingress and egress of liquid, such as the treatment formulation, only through pipes or ducting components.

Typically, the drum is mounted substantially horizontally in the tub.

According to a third aspect of the invention, there is provided the use the microparticle filter of the first aspect or textile treatment apparatus of the second aspect for filtering microparticles from effluent from a textile treatment apparatus.

The use of the textile treatment apparatus according to the third aspect may comprise the treatment of textiles comprising cellulose. In particular, the textile may comprise the treatment of cotton or polycotton. The textile treatment apparatus may be as described under the second aspect. The textile treatment apparatus may comprise a drum, the drum having a volume between 120 L or 150 L and 20,000 L or between 200 L and 10,000 L or between 500 L and 5000 L or between a range formed from any of these end points.

The use may be for filtering cellulose microparticles from effluent from a textile treatment apparatus.

The use may be performed according to the methods of the fourth or fifth aspects.

The effluent is preferably as described above. The cellulose microparticles may be microfibres. The fibres may have a longest linear dimension of from 1 μm to less than 1 mm. The present inventors have found the microparticle filter, and textile treatment apparatus are especially suited to filtering and at least partially removing fibres of this size.

According to a fourth non-claimed aspect, there is provided a method of filtering cellulose microparticles from effluent from a textile treatment apparatus, the method comprising:

i. supplying effluent from a textile treatment apparatus to a microparticle filter, the microparticle filter comprising a filter chamber and a filter medium contained therein, a filter residue removal apparatus and a filter residue collection chamber external to the filter chamber;

ii. filtering cellulose microparticles from the effluent through the filter medium to form a cellulose microparticle containing filter residue in the filter chamber;

iii. stopping the supply of effluent to the microparticle filter;

iv. opening the filter chamber to provide access from the filter chamber to the filter residue collection chamber;

v. automatically operating a filter residue removal apparatus to remove the cellulose containing residue from the filter chamber to a filter residue collection chamber via the opening in the filter chamber;

vi. closing the filter chamber.

The filter residue may be dewatered between steps iii and iv.

According to a fifth aspect, there is provided a method of filtering microparticles from effluent from a textile treatment apparatus comprising:

i. providing a microparticle filter according to the first aspect;

ii. placing the microparticle filter in the first configuration;

iii. supplying effluent from a textile treatment apparatus to the inlet of the microparticle filter;

iv. filtering the effluent through the filter medium and passing the filtered effluent to the outlet;

v. stopping the supply of effluent;

vi. placing the microparticle filter in the second configuration;

vii. operating the filter residue removal apparatus to transfer filter residue from the filter chamber to the filter residue collection chamber.

The method may comprise the subsequent steps of:

vii. moving the moveable member back to the first configuration;

ix. resuming supply and filtering of effluent.

The method may comprise the steps of:

x. repeating steps i. to vi. one or more times;

xi. emptying the microparticle containing residue from the residue collection chamber.

The filter residue may be dewatered between steps v and vi.
The methods of the fourth and fifth aspect may comprise filtering microparticles from an effluent from a textile treatment apparatus containing cellulose containing textiles.
The methods of the fourth and fifth aspects may be methods of filtering cellulose microparticles from effluent from a textile treatment apparatus
The cellulose microparticles may be microfibres.
The methods of the fourth and fifth aspect may comprise stopping the supply of effluent comprises operating a valve upstream of the microparticle filter.
Dewatering may comprise any of rotating the filter medium to centrifugally remove water from the residue, blowing air through the residue, heating the residue, or applying a vacuum to the residue, or a combination thereof.
The supply of effluent may be from a single treatment cycle of the textile treatment apparatus. The effluent from a single treatment cycle may be delivered in one continuous stream, or the supply of effluent from a single treatment cycle may be supplied intermittently.
In particular, the method of the fourth aspect of the present invention is especially suited to filtering particles which are or comprise fibres and at least some of said fibres have a longest linear dimension of from 1μm to 500μm. The present inventors have found the filter, textile treatment apparatus and method are especially suited to filtering and at least partially removing fibres of this size.

Automatic operation of the microparticle filter may comprise operating one or more actuators of the microparticle filter necessary to remove the cellulose containing residue from the filter chamber. That is, automatic operation may comprise removing the cellulose containing residue from the filter chamber without requiring manual emptying by a user or requiring access to the microparticle filter by a user.
The fibres being filtered in the method of the fourth aspect of the present invention typically originate from a textile which has been treated in a liquid medium.
The treatments preferably include washing, colouring (especially dyeing and pigmenting), abrading, ageing, softening, rinsing, bleaching, sterilising, desizing and depilling and combinations thereof.
The method is especially suited to filtering effluent feeds which originate from a treatment or from treatment apparatus as previously mentioned.
Preferably, the textile treatment apparatus is used to rotate (especially tumble) one or more textiles and a liquid medium in a drum.
At least some of the fibres in the effluent feed may comprise synthetic fibres. Examples of synthetic fibres include: nylon, polyester, polyurethane, acrylic, acrylonitrile and the like.
The effluent feed may be at a temperature of from 5 to 95°C, more preferably from 5 to 70°C and especially from 10 to 60°C as it passes through the filter.
Typically, the microparticle filter is primed with liquid, more preferably with an aqueous liquid and especially with water prior to the feed entering the filter.
In order of increasing preference, the microparticle filter according to the first aspect of the present invention or the textile treatment apparatus according to the second aspect of the present invention is able to filter effluent feeds from at least 2, 3, 4, 5, 10, 20, 30, 50 and 100 treatment cycles prior to becoming blocked or requiring cleaning.
In order of increasing preference, the microparticle filter according to the first aspect of the present invention or the textile treatment apparatus according to the second aspect of the present invention is able to filter feeds whose total volume is at least 10, 50, 100, 500, 1000, 5000 and 10,000 litres prior to becoming blocked or requiring cleaning.
The microparticle filter may be operated such that the effluent flows through the filter once (and only once). This method or operation is relatively fast.
The filter may be operated such that the feed of one treatment cycle is cycled through the filter several times. This method of operation can provide especially good efficiencies of filtration although the filtering times required may be a little longer. Preferably, the feed is cycled through the filter at least 2, 3, 4 and 5 times. Preferably, the feed is cycled through the filter no more than 100 times. The number of cycles of a feed may be considered to be the total volume of liquid passed through the filter in a treatment cycle divided by the volume of fresh liquid used in the treatment cycle.

It will be appreciated that the features, preferences, and embodiments described hereinabove may be applicable where combinations allow, to each of the figures. The invention is further described with reference to the following figures.

**Summary of the Figures**

Figures 1a and 1b show cross sectional schematic side views of a microparticle filter not according to the claims. The microparticle filter is shown in a first configuration in figure 1a and in a second configuration in figure 1b

Figure 2 shows cross sectional schematic of an alternative microparticle filter according to a non-claimed embodiment of the present disclosure. The microparticle filter is shown in a second configuration.

Figures 3a and 3b show cross sectional schematics of an alternative microparticle filter not according to the claims. Figure 3a is a top view and figure 3b is a side view of the microparticle filter in a first configuration.

Figure 4 shows cross sectional isometric schematic of an alternative microparticle filter not according to the claims.

Figure 5 shows cross sectional isometric schematics of an alternative microparticle filter not according to the claims.

Figures 6a and 6b show a cross sectional schematic of an alternative microparticle filter not according to the claims. The microparticle filter is shown in a first configuration in figure 6a and in a second configuration in figure 6b.

Figure 6c shows a schematic isometric view of an alternative microparticle filter not according to the claims.

Figures 7a and 7b show cross sectional schematic of an alternative microparticle filter according to the present disclosure. The microparticle filter is shown in a first configuration in figure 7a and in a second configuration in figure 7b

Figure 8 shows a schematic isometric view of an alternative microparticle filter according to the present disclosure.

Figures 9a and 9b shows a side view cross section of an alternative microparticle filter according to the present disclosure. The microparticle filter is shown in a first configuration in figure 9a and in a second configuration in figure 9b.

Figure 10a shows a side view of an alternative microparticle filter according to the present disclosure, the moveable member is shown in the first configuration.

Figure 10b shows an isometric view of the microparticle filter of figure 10a, with the moveable member in the second configuration.

Figure 10c shows an alternative isometric view of the microparticle filter of figures 10a and 10b with part of the filter residue collection chamber removed.

Figure 10d shows an isometric cross-sectional view of the microparticle filter of figure 10a with part of the filter residue collection chamber removed.

Figure 10e shows an isometric cross-sectional view of the filter chamber and pipe of the microparticle filter of figure 10a in the first configuration.

Figure 10f shows an isometric cross-sectional view of the filter chamber and pipe of the microparticle filter of figure 10a in the second configuration.

Figure 10g shows a side view of the filter chamber and pipe of the microparticle filter of figure 10a in the second configuration.

Figure 10h shows a side view of the filter support and baffle of the microparticle filter of figure 10a.

Figure 11 shows a flow diagram illustrating a method according to an aspect of the present disclosure.

Figure 12 shows a flow diagram illustrating an alternative method according to an aspect of the present disclosure.

**Detailed Description**

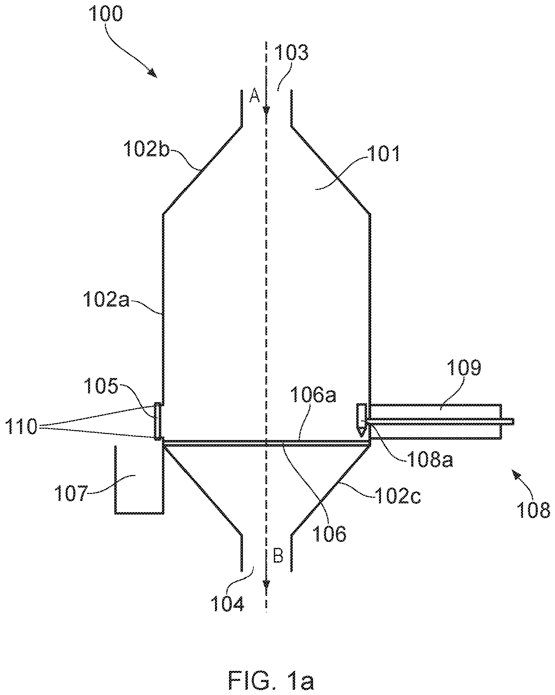

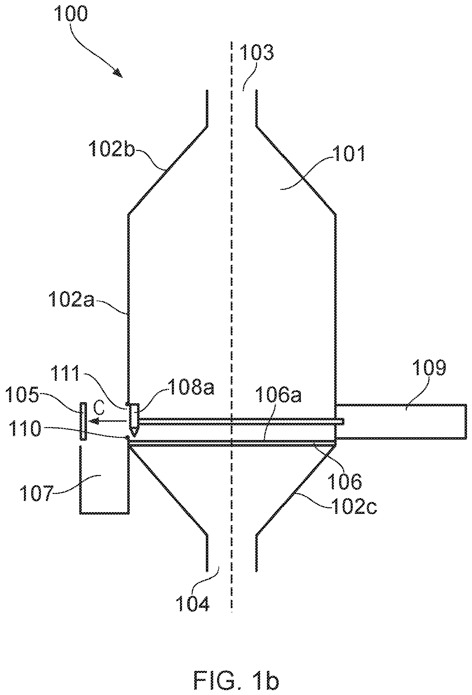

With reference to figures 1a and 1b, a microparticle filter 100 not according to the claims is shown. The microparticle filter 100 comprises a filter chamber 101. A filter medium 106 is contained within the filter chamber 101. The filter chamber 101 is bounded by chamber walls 102, in which there is an inlet 103 and an outlet 104. In figures 1a and 1b the chamber walls 102 comprise a cylindrical section 102a, a frustrum 102b adjacent to the inlet, a frustrum 102c adjacent to the outlet. There is an opening 111 in chamber walls 102 between frustrum 102c and cylindrical section 102a, and a moveable member 105. The moveable member 105 is moveable between a first configuration shown in figure 1a and a second configuration shown in figure 1b.

In the first configuration the movable member 105 closes the opening 111 so that the filter chamber 101 is sealed. When the filter chamber 101 is sealed, effluent can only enter the filter chamber 101 through the inlet 103 and filtered effluent can only leave the filter chamber 101 through the outlet 104.

In the first configuration (figure 1a) effluent enters the filter chamber 101 through the inlet 103 illustrated in figure 1a with streamline A. Effluent passes through the filter medium 106 and the filter medium 106 filters solid particulate material from the effluent. The solid particulate material may be predominantly lint from washed textiles, some of which will be microfibres and will accumulate on the upstream surface, i.e. the first surface of the filter medium 106a to form filter residue. The filtered effluent passes out of the filter chamber 101 through outlet 104 shown in figure 1a by streamline B.

In the second configuration (figure 1b) the moveable member 105 is positioned away from the opening 111 in the wall 102 of the filter chamber 101. A filter residue collection chamber 107 is located external to the filter chamber 101 and is accessible from the filter chamber 101 through the opening 111 when the microparticle filter 100 is in the second configuration. The microparticle filter 100 comprises a filter residue removal apparatus 108. The filter residue removal apparatus 108 is operable when the microparticle filter 100 is in the second configuration to move filter residue accumulated on the upstream surface (i.e. the first surface) of the filter medium 106 through the opening 111 and into the filter residue collection chamber 107.

In operation, effluent is supplied through the inlet 103 and filtered when the microparticle filter 100 is in the first configuration as described above i.e. with the opening 111 closed by the moveable member 105. Supply of the effluent is stopped and residual effluent in the filter chamber 101 is drained out of the outlet 104. This leaves filter residue with reduced liquid content. After draining, the filter residue may be dewatered and may have a high quantity of solids compared to liquid, i.e. the residue may resemble a slurry, paste, or damp particulate material. If necessary, the filter residue can be left on the filter medium 106 for a time period to further reduce liquid content. The filter is then put into the second configuration by moving the moveable member 105 away from the opening 111. The filter residue removal apparatus 108 is operated to move the filter residue from the filter medium 106 to the filter residue collection chamber 107. In figure 1b the filter residue removal apparatus 108 is shown as a contact element 108a, and actuator 109, which may be an electric linear motion actuator. The contact element 108a moves relative the filter medium to scrape or push the residue off the first surface of the filter medium 106a. The contact element 108a may be an elongate element that conforms to the surface of the filter medium, e.g. a rubber blade. In figure 1b, the filter residue removal apparatus 108 is operated to push residue off the surface of the filter medium 106, through the opening 111, and into the filter residue collection chamber 107. The microparticle filter 100 may then be returned to the first configuration by restoring the moveable member 105 to block the opening 111 and returning the contact element 108a to its original position. After one or multiple iterations of filtering effluent and transferring the filter residue as described above, the filter residue collection chamber 107 may be emptied of filter residue. The filter residue collection chamber 107 may be detachable from the filter chamber 101 to assist emptying.

In figures 1a and 1b, the filter chamber 101 is shown as a container shaped as a cylindrical section 102a with two frustra 102b, 102c, one connected to the inlet and the other to an outlet. However, the filter chamber 101 may take other forms, examples of which are disclosed herein. The term "chamber walls" and numerals 102 are intended to refer to all of the static walls of the filter chamber 101, i.e. all of the filter chamber excluding the inlet, outlet, moveable member and opening. The term "chamber walls" may encompass any static wall of the filter chamber. The chamber walls 102 may comprise a plurality of individual walls assembled to form the chamber walls 102. The chamber walls may be non-permanently connected to permit disassembly and access to the interior of the filter chamber 101, e.g. the frustra 102b, 102c may be screwed or bolted to the cylindrical section 102a. The filter medium 106 may also be removable from the filter chamber 101 to assist cleaning of the filter medium 106 by the user.

The inlet 103 and outlet 104 are shown as coaxially positioned along an axis 5 that extends through the inlet 103 and outlet 104, through the centre of the filter chamber 101 and the filter medium 106, the axis 5 may be considered as a central axis of the filter and also a filter axis as defined herein. The inlet 103 is shown positioned vertically above the outlet 104. In this configuration effluent may fall through the inlet 103, through the filter medium 106 and out of the outlet 104 under the influence of gravity. However, microparticle filters of the present disclosure do not need to be limited to this configuration. In other configurations effluent may be driven e.g. by a pump (not shown) upstream of the microparticle filter or by a vacuum source (not shown) downstream of the microparticle filter.

In figures 1a and 1b, the filter medium 106 is shown as a planar element. The filter medium is also shown orientated in a horizontal plane. However, the filter medium 106 may take a range of geometric shapes, both planar and non-planar, and different orientations as disclosed herein.

In figures 1a and 1b, the moveable member 105 is shown moving linearly between the first configuration to the second configuration, which in figures 1a and 1b the movement in the same plane or in a parallel plane to the filter medium 106. In figures 1a and 1b this direction of movement is in the horizontal plane and is also laterally, i.e. radially outwards from the filter axis. However, the moveable member may move in other directions as disclosed herein.

In figures 1a and 1b a deformable member is shown 110 attached to a portion of the chamber wall 102 around the perimeter of opening 111. The deformable member 110 contacts the portion of the movable member 105 in the first configuration and the deformable member 110 deforms to form a seal, e.g. a rubber O-ring seal. Alternatively, or in addition to, the chamber walls 102 and/or moveable member 105 may be shaped to comprise cooperating surfaces to form a seal therebetween. For example, a portion of chamber walls 102 may comprise recesses, channels or grooves that cooperate with a corresponding portion of moveable member 105, or vice versa. A cooperating surface may be any structure that forms a tight fit or tortuous path between an opposing surface on the other of the chamber walls or the moveable member to prevent effluent escape.

In the first configuration biasing means (not shown) may apply a biasing force on the moveable member 105 urging it against the chamber walls 102 to improve the seal between the moveable member 105 and the chamber walls 102. For example, the biasing means may comprise a spring element (not shown) or where the moveable member is directly connected to actuator 109, the actuator 109 may be configured to impart a force on the moveable member 105 when in the first configuration.

In figures 1a and 1b, the filter residue collection chamber 107 is shown positioned laterally with respect to the filter medium. That is, the filter residue collection chamber is shown positioned to one side of the filter medium. Specifically, where the filter residue collection chamber is positioned laterally to the filter medium, the filter residue may be moved to the filter residue collection chamber 107 by the filter residue removal apparatus 108 through the opening along a single vector. The positioning laterally of the filter residue chamber 107 to the filter medium is particularly relevant where the filter residue removal apparatus 108 comprises a contact element 108a. The filter residue collection chamber is shown in figures 1a and 1b positioned below the height of the filter medium so that residue drops into the filter residue collection chamber 107 through the open topmost face. Optionally, the bottom of the collection chamber may be positioned at the same height as the filter medium and the open face may be the face adjacent to the cylindrical wall, so that residue can be transferred into the collection chamber without falling. The filter medium in figures 1a and 1b is shown as a planar element in a horizontal arrangement, however, the filter may be in other orientations. In such other orientations the filter residue collection chamber may be positioned accordingly. For example, if the filter medium is planar and in a vertical arrangement, the filter residue collection chamber may be laterally and vertically below the filter medium to collect residue that falls downwards and across the filter medium.

In figures 1a and 1b the residue removal apparatus 108 is shown comprising a contact element which contacts a surface of the filter medium 106. The contact element 108a may comprise a linear rubber blade which may conform to the shape of the filter medium 106. The residue removal apparatus may be arranged so that the contact element moves relative to the filter medium.

In figures 1a and 1b, the microparticle filter 100 reduces the water content of the filter residue by allowing the effluent to drain out of the filter chamber 101. However, the microparticle filter 100 may comprise dewatering apparatus (not shown). Exemplary dewatering apparatus that may be applicable to figure 1a and 1b may include but is not limited to apparatus to pass air through the inlet and outlet to further dry the filter residue, or a press to press the filter residue against the first surface of the filter medium 106a. Preferably the filter residue removal apparatus 108 is configured to move the filter residue in a non-flowable state.

The actuator 109 is shown as an electric linear motion actuator, but the actuator 109 may comprise amongst others: hydraulic devices, pneumatic devices, and other electromagnetic devices or hand operable mechanisms.

The moveable member 105 and the contact element 108a may be configured to move together. That is, as the contact element 108a moves across the filter medium 106, the moveable member may move at the same time. The moveable member 105 and contact element 108a may move in the same direction and may also be directly connected. The moveable member and contact element may both be moved by actuator 109.

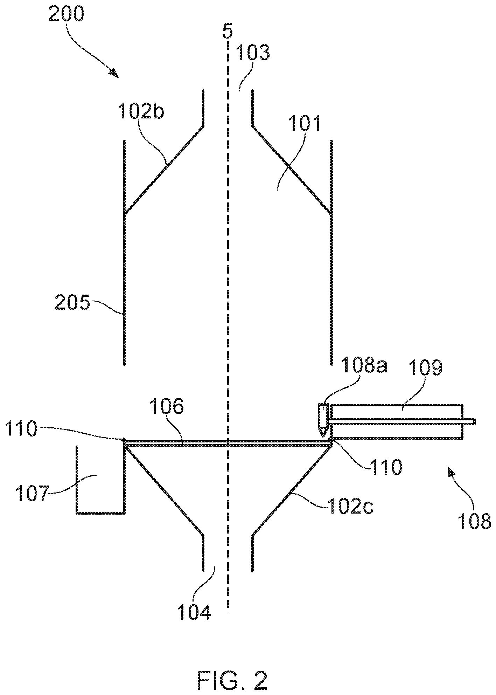

Referring to figure 2 an alternative microparticle filter 200 not according to the claims is shown. The microparticle filter 200 of figure 2 comprises essentially the same integers as microparticle filter 100 of figures 1a and 1b. Like numerals are used to denote like integers. The microparticle filter 200 of figure 2 differs from the microparticle filter 100 of figure 1 in that the moveable member 205 comprises a cylinder around the circumference of filter chamber 101. The chamber walls 102 comprises two frustra 102b, 102c between which the moveable member 205 is positioned. The moveable member 205 moves perpendicular to the planar filter medium, i.e. parallel to the filter axis 5. In Figure 2, the moveable member 205 is shown as having moved vertically upwards to the second configuration. The moveable member 205 moves vertically downwards to adopt the first configuration. The frustra 102b, 102c remain static. In the second configuration opening 111 extends between the circumference of the vertically lowest edge of the moveable member 205 and vertically topmost part of frustra 102c, in figure 2 this is shown proximate to and above the perimeter of the filter medium 106. In the second configuration, as shown in figure 2, the filter residue removal apparatus 108, comprising a contact element 108a and actuator 109 are operable to remove filter residue from the filter chamber 101 to the filter residue collection chamber 107 in a similar manner to that described under figure 1b. A conformable member 110 is shown around the circumference of the filter medium 106 and frustra 102c to provide a seal when the moveable member is in the first configuration. A second conformable member may be provided between the moveable member 205 and frustrum 102b to provide a seal.

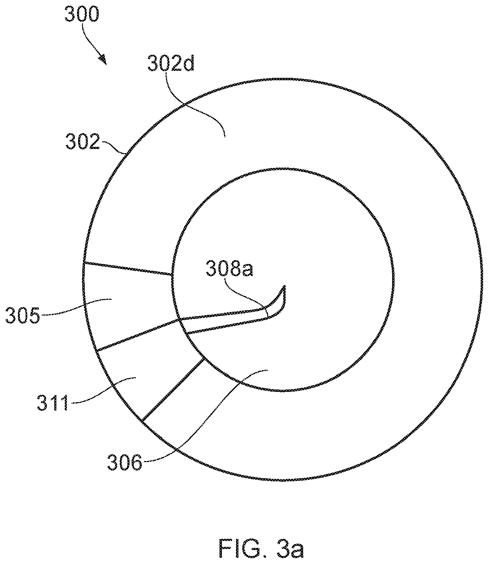

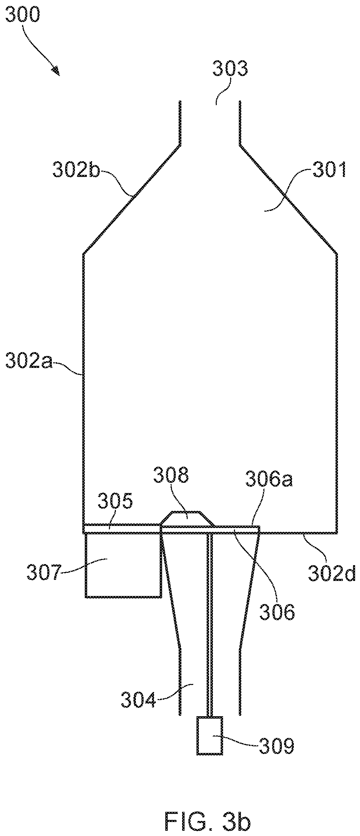

Referring to figure 3a an alternative microparticle filter 300 not according to the claims is shown as a simplified schematic top view. Figure 3b shows the same microparticle filter 300 as a side view cross section. The microparticle filter 300 comprises a planar and circular filter medium 306 surrounded by chamber walls 302. The chamber walls 302 comprises a cylindrical 302a wall connected to a frustrum 302b at the inlet end. A second frustrum 302c at the outlet end comprises a wide end of similar diameter to the filter medium 306 which connects to a base wall 302d. The inlet 303 is defined by frustrum 302b and is positioned above the filter medium and base wall 302d as shown in figure 3b. The opening 311 is positioned in the base wall 302d and the filter residue collection chamber 307 positioned beneath the opening 311. The moveable member 305 is slidably mounted on the base wall 302d and configured to slidably move on an arcuate path around the circumference of the filter medium 306. The moveable member 305 is moveable between the first configuration where opening 311 is closed and a second configuration where filter residue collection chamber 307 is accessible from the filter chamber 301 through opening 311. Figure 3a shows the moveable member moving into the second configuration. Movement may be achieved by an actuator (not shown). The filter residue collection chamber 307 is shown positioned laterally. i.e. it is adjacent to a small radial segment of circumference of the filter medium 306 and is positioned radially and horizontally outwards of the filter medium 306. The filter residue collection chamber is shaped as a box with an open top face. The open top face is positioned at the same height or below the height of filter medium 306. The microparticle filter 300 also comprises a filter residue removal apparatus comprises a static contact element 308a and an actuator 309. The filter element is rotatably mounted in the base wall 302d with a sealed bearing. The actuator 309 is arranged to rotate the filter medium 306 against the static contact element 308a. The static contact element is shown as a scraper blade in contact with the top surface (i.e. first surface) of the filter medium 306.

In operation, the microparticle filter 300 is first placed in the first configuration, with the moveable member blocking the opening 311 so that the filter residue collection chamber 307 is inaccessible from within the filter chamber 301. Effluent enters the filter chamber from the inlet 303 positioned above the filter medium and is constrained by filter walls 302a, 302b, 302d. Effluent passes through filter medium 306 and is filtered. Filtered effluent exits the filter chamber 301 via frustrum 302c and outlet 304. During filtration of the effluent, filtered particles accumulate as a residue on the first surface of filter medium 306a. After supply of effluent has stopped, residual liquid in the filter chamber is drained from the filter chamber 301 to reduce the liquid content of the filter residue until it is in a non-flowable state. The microparticle filter 300 is placed in the second configuration by moving the moveable member 305 away from the opening 311 and adopting the second configuration. The filter residue is then transferred from the surface of the filter medium to the filter residue collection chamber 307 by the filter residue removal apparatus. The actuator 309 of the filter residue removal apparatus rotates the filter medium 306 against the static contact element 308a. As the filter residue builds up against the contact element 308a it is urged radially outwards to the filter residue collection chamber 307 by rotation of the filter medium 306. The shaping or curvature of the static contact element 308a in combination with the direction of rotation of the filter medium 306 as provided by the actuator work together to urge the filter residue towards the opening 311. Residue is urged off the filter medium 306 and falls into the filter residue collection chamber 307 via opening 311 under the influence of gravity. After the residue is transferred, the microparticle filter 300 re-adopts the first configuration to resume filtration of effluent.

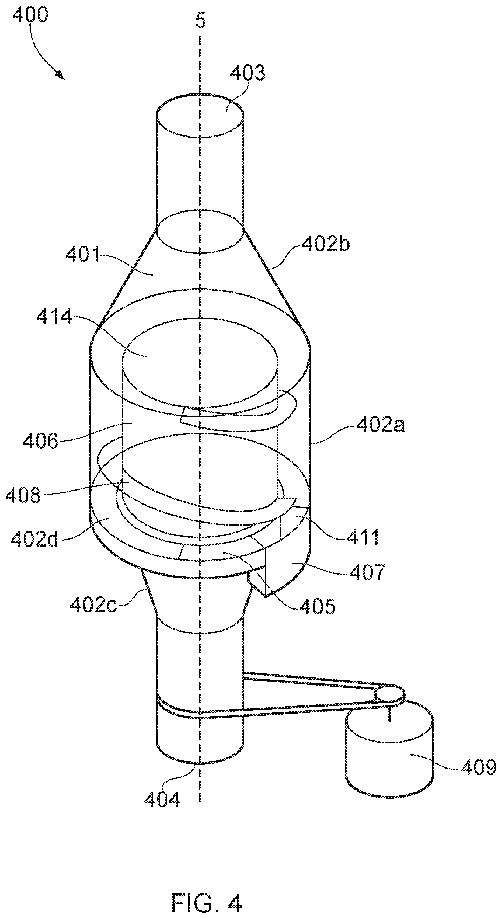

Referring to figure 4 an alternative microparticle filter 400 not according to the claims is shown in a schematic isometric projection. Microparticle filter 400 comprises a filter chamber 401, an inlet 403 and an outlet 404. Contained within the filter chamber 401 is the filter medium 406.

The chamber walls 402 comprises a cylindrical wall 402a, frustra 402b, 402c and a base wall 402d. The frustrum 402b and base wall 402d are both connected to cylindrical wall 402a. A second frustrum 402c is connected to the filter medium adjacent to the base wall 402d and is rotatable therewith.

The filter medium 406 is cylindrical filter element which extends in the vertical direction, the filter medium 406 has a central axis which is parallel to and coincident with filter axis 5. The cylindrical filter medium 406 comprises a non-porous end 414, the curved cylindrical walls of the cylindrical filter medium 406 are porous. The filter medium 406 encloses an internal volume which connects to the outlet 404 via frustrum 402c. Effluent enters the filter chamber 401 through inlet 403 and is filtered as it passes from the external side (i.e. the first side) of the cylindrical filter medium into the internal volume of the cylindrical filter medium. Filtered effluent exits the filter chamber 401 via frustrum 402c and outlet 404. The filter residue removal apparatus comprises a helical contact element 408 statically mounted within filter chamber 401. An inner edge of the helical contact element 408 is in contact against the outer surface of the filter medium 406. The filter residue removal apparatus also comprises a sealed rotary bearing 415 between the filter element 406 and the base wall 402d. The filter residue removal apparatus also comprises an actuator 409 to rotate the outlet 404, frustrum 402c and filter medium 406 to which it is connected. Rotation of filter medium 406 moves the first surface of the filter medium relative to the helical contact element 408. The opening 411 is positioned within base wall 402d at the bottom end of the helical contact element 408. The filter residue collection chamber 407 is positioned beneath opening 411. The moveable member 405 is shown as a planar element and moves between the first and second configurations by moving in an arcuate path that follows a circumferential direction around the filter axis 5. The moveable member 405 is planar and aligned in the horizontal plane. In figure 4 the moveable member is shown in the second configuration i.e. the moveable member has moved around the circumference of the filter medium 406, in a plane perpendicular to the filter axis 5. In figure 4, the filter axis 5 is vertically aligned through the centre of the inlet 403, outlet 404 and coincident with the central axis of the cylindrical filter medium 406.

In use, microparticle filter 400 is placed in the first configuration and effluent enters the filter chamber through inlet 403. Filter residue accumulates on the first surface of filter medium as effluent passes to the interior of the cylindrical filter medium 406. Filtered effluent exits the filter chamber via frustrum 402c and outlet 404. The effluent is drained from the filter chamber and the microparticle filter 400 is put in the second configuration by moving the moveable member 405 away from the opening 411. The actuator 409 rotates the filter medium 406 which pushes the accumulated residue against the helical contact element 408. The helical shape of the contact element 408 and correct direction of rotation of the filter medium causes the filter residue to move down the helical contact element where it falls through opening 411 into the filter residue collection chamber 407.

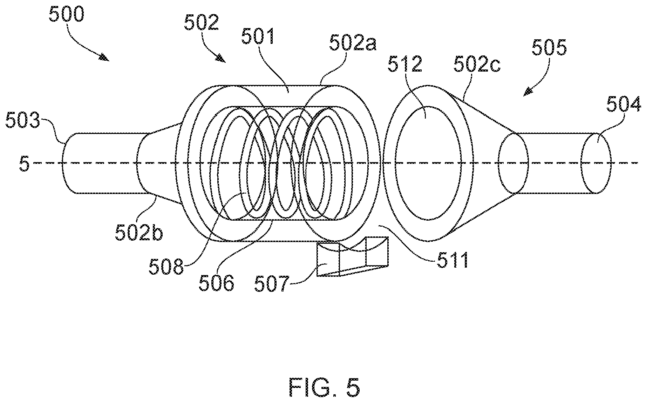

Referring to Figure 5 an alternative microparticle filter 500 not according to the claims is shown in a schematic isometric projection. The microparticle filter 500 comprises a filter chamber 501 comprising chamber walls 502 and moveable member 505. The microparticle filter 500 has a central axis 5 which is horizontally aligned. The chamber walls 502 comprise a cylindrical wall 502a and frustrum 502b at the inlet 503 end of the filter chamber 501. A cylindrical filter medium 506 is positioned within the filter chamber 501 and arranged so that effluent from the inlet 503 passes into the interior of the cylindrical filter medium 506. Filtration of the effluent occurs as effluent passes from the interior first surface of the cylindrical filter medium 506, through the cylinder wall to the exterior of the cylindrical filter medium. The moveable member 505 comprises frustrum 502c, outlet 504 and cylinder end wall 512. The cylinder end wall cooperates with the with the cylindrical filter medium 506, to close the outlet end of the filter medium when the microparticle filter 500 is in the first configuration. That way, in the first configuration, effluent may only pass through the filter by being filtered through the cylindrical wall of the filter medium 506. In the first configuration the frustrum 502c of the moveable member 505 is sealed against the cylindrical wall 502a of the filter chamber 501, so that filtered effluent is channelled to the outlet 504 and out of the microparticle filter 500.

In the second configuration, as shown in figure 5, the moveable member 505 comprising the cylinder end wall 512, outlet 504 and the frustrum 502c is displaced in the horizontal direction away from the filter medium. This creates an opening 511 between the frustrum 502c of movable member 505 and the cylindrical wall 502a of the chamber wall 502. A filter residue collection chamber 507 is positioned vertically below opening 511 so that filter residue can fall from out of the cylindrical filter medium 506 into the filter residue collection chamber 507 when the microparticle filter 500 is in the second configuration. The filter residue collection chamber 507 is shown as a box with an open top face through which filter residue can enter.

The microparticle filter 500 also comprises a filter residue removal apparatus which comprises a helical contact element 508 positioned inside the cylindrical filter medium 506. The helical contact element 508 is configured so that the outwards edge of the helical contact element 508 contacts the internal surface (i.e. first surface) of the filter medium 506. The filter residue removal apparatus also comprises an actuator (not shown) configured to rotate the cylindrical filter medium 506 relative to the helical contact element 508. The actuator may connect to the cylindrical filter medium 506 via a drive shaft passing through the inlet 503 and frustrum 502b. The filter residue removal apparatus may also comprise a sealed rotary bearing (not shown) may between the filter medium 506 and the chamber wall 502. The helical contact element 508 is statically mounted relative to the filter medium.

In operation, the microparticle filter 500 is placed in the first configuration, with the moveable member 505, comprising the cylinder end wall 512, and the frustrum 502c blocking the opening 511 and closing the end of the cylindrical filter medium 506, so that the filter residue collection chamber 507 is inaccessible from within the filter chamber 501. Effluent will enter the filter medium 506 from the inlet 503. Effluent is filtered as it passes through the cylindrical wall of filter medium 506 into the wider filter chamber 501, where it exits the filter via the frustrum 502c and outlet 504. During filtration of the effluent, filtered particles will accumulate as a residue on the inner surface of cylindrical filter medium 506. After the supply of effluent has stopped, residual liquid in the filter chamber is drained from the filter chamber via the outlet 504. Then the filter is placed in the second configuration by moving the moveable member 505, i.e. the frustrum 502c and cylinder end wall 512, horizontally away from the cylindrical wall 502a and cylindrical filter medium 506. Thus, providing an opening 511 between the moveable member 505 and the filter chamber 501. The filter residue is then transferred from the internal surface of the cylindrical filter medium to the filter residue collection chamber 507 by the filter residue removal apparatus. The actuator (not shown) of the filter residue removal apparatus rotates the filter medium 506 relative to the static helical contact element 508. The residue accumulated on the first surface of the filter medium 506 is urged laterally by the helical shape of the contact element 508 towards the open end of filter medium 506. The filter residue then falls from out of filter medium 506, through opening 511 and into filter residue collection chamber 507. After the filter residue is transferred, the microparticle filter 500 may adopt the first configuration to resume filtration of effluent.

The frustrum 502b may be configured to rotate with the filter medium 506. The filter medium may be connected to the frustrum 502b and a sealed rotary bearing may be between one of the frustrum 502b and the filter medium and the cylindrical chamber wall 502a. Alternatively, the chamber wall 501 may rotate with the filter medium 506, or the filter element may rotate independently of the chamber walls 502.

The actuator (not shown) of the filter residue removal apparatus may also be configured to rotate the cylindrical filter medium 506 at sufficiently high angular velocity to dewater the filter residue using centrifugal force. Thus, the actuator of the filter residue removal apparatus (not shown) may be considered also as dewatering apparatus.

An alternative microparticle filter (not shown) may comprise substantially the same integers as those in figure 5, but with an alternative filter residue removal apparatus. The filter residue removal apparatus may comprise a helical contact element rotatably mounted within a static cylindrical filter medium. The helical contact element is rotated by an actuator with the filter medium remaining static to urge residue along the cylindrical filter element and into the filter residue collection chamber in a similar manner to figure 5.

The microparticle filter of figure 5 is shown in a horizontal configuration. Alternatively, the filter residue collection chamber 507 may be positioned coaxially within frustrum 502c and the cylinder end wall 512 configured to move radially outwards as the moveable member. In this arrangement, the microparticle filters of figure 5 can be arranged to operate aligned vertically.

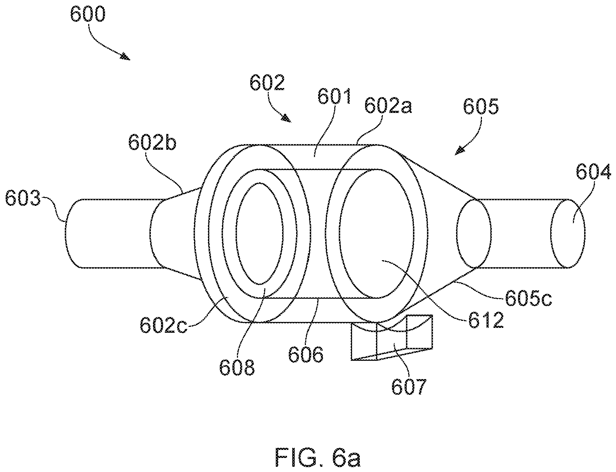

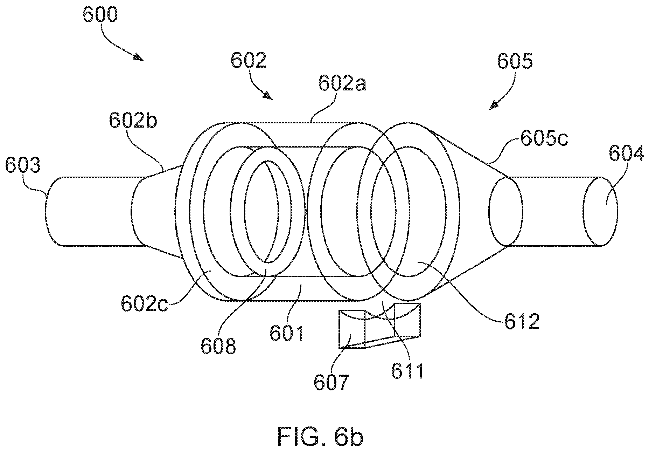

Referring to figure 6a and figure 6b an alternative microparticle filter 600 not according to the claims is shown in first and second configurations respectively. Microparticle filter 600 comprises a filter chamber 601 the shape of which is defined by chamber walls 602 and a moveable member 605. The chamber walls 602 comprises the cylinder 602a, a frustrum 602b at the inlet 603 end of the filter chamber 601 and an annular wall 602c. A cylindrical filter medium 606 is positioned within the filter chamber 601. The cylindrical filter medium 606 comprises an internal volume which defined by the volume the filter medium 606 encloses. The filter medium 606, inlet 603 and frustrum 602a are arranged so that effluent from the inlet 603 passes through the annular wall 602c into the interior of the cylindrical filter medium 606. Filtration of the effluent occurs as effluent passes from the internal volume of the cylindrical filter medium 606, through the first surface to the exterior of the cylindrical filter medium 606. The moveable member 605 comprises a cylinder end wall 612 at the outlet 604 end of the filter medium 606. The end wall is non-porous and in the first configuration the end wall closes the filter medium 606 so that effluent may only pass through the cylindrical wall of the filter medium 606. The moveable member also comprises the frustrum 605c at the outlet end. In the first configuration the frustrum 605c of the moveable member 605 is sealed against the cylindrical wall 602a of the filter wall 602, so that filtered effluent is channelled to through frustrum 605c, to the outlet 604 and out of the microparticle filter 600.

In the second configuration, the moveable member 605 comprising the end wall 612 and the frustrum 602c is displaced in the horizontal direction away from the filter medium 606. This creates an opening 611 between the chamber wall 602 moveable member 605 and opens the end of the cylindrical filter medium 606. A filter residue collection chamber 607 is positioned vertically below opening 611 so that filter residue can fall from within the cylindrical filter medium 606 to the filter residue collection chamber 607 when the microparticle filter 600 is in the second configuration.

The filter residue removal apparatus comprises an annular contact element 608 positioned inside the cylindrical filter medium 606. The annular contact element 608 is configured so that an outwards edge of the annular contact element 608 contacts the internal surface (i.e. first surface) of the filter medium 606. The filter residue removal apparatus also comprises an actuator (not shown) configured to move the annular contact element along the length of the cylindrical filter medium 606, from the end proximal to the inlet 603 (as shown in figure 6a) to the end proximal to the outlet 604 (as shown in figure 6b) .

In operation, the microparticle filter 600 is placed in the first configuration as shown in figure 6a, with the moveable member 605, comprising the end wall and frustrum 612, 602c closing the opening 611 and the end of the cylindrical filter medium 606, so that the filter residue collection chamber 607 is inaccessible from within the filter chamber 601. Effluent enters the filter medium 606 from the inlet 603. The effluent is filtered as it passes through the cylindrical wall of filter medium 606 and exits the filter chamber through the frustrum 602c and outlet 604. During filtration of the effluent, filtered solid particles will accumulate as a filter residue on the inner cylindrical surface of the filter medium 606. After the supply of effluent has stopped, residual liquid in the filter chamber 601 is drained from the filter chamber via the outlet 604. Then the filter is placed in the second configuration as shown in figure 6b by moving the moveable member 605, i.e. the frustrum 602c and cylinder end wall 612, laterally away from the cylindrical chamber wall 602a and cylindrical filter medium 606. Thus, providing an opening 611 between the moveable member 605 and the chamber wall 602. The filter residue is then transferred from the internal surface of the cylindrical filter medium to the filter residue collection chamber 607 by the filter residue removal apparatus. The actuator (not shown) of the filter residue removal apparatus slides the contact element 608 along the interior of the filter medium to push residue out of the open end of the cylindrical filter medium 606 (i.e. the end proximal to the outlet 604). The filter residue then falls from the filter medium, through opening 611 and into filter residue collection chamber 607. After the residue is transferred, the microparticle filter 600 may adopt the first configuration and the contact element 608 may return to the end of the filter medium 606 proximal to the inlet 403 to resume filtration of effluent.

The actuator of the filter residue removal apparatus may be configured to also move the moveable member 605 between the first and second configurations. Optionally the moveable member 605 and the contact element 608 may be moved together by the actuator.

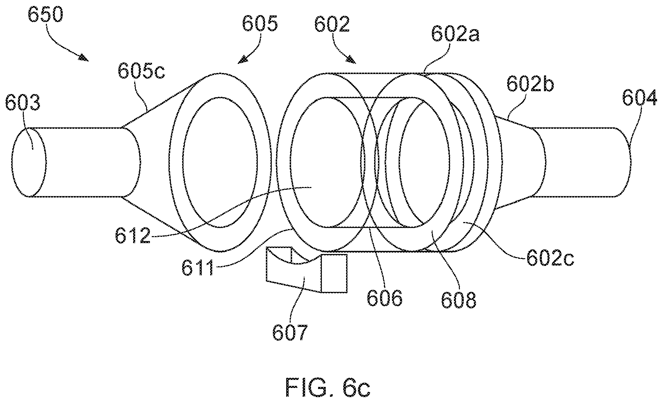

Referring to Figure 6c an alternative microparticle filter is shown. The filter 650 is similar to that of figures 6a and 6b. The moveable member 605 comprises frustrum 605b and is arranged so that effluent from the inlet 603 is delivered to the exterior of cylindrical filter medium 606. A non-porous cylinder end wall ensures effluent passes through the cylindrical filter medium 606. Chamber walls 602 comprise cylindrical chamber wall 602a, annular end wall 602c and frustrum 602b. Frustrum 602b is arranged so that filtered effluent is drained from the internal volume of the cylindrical filter medium 606 to the outlet 604. The contact element 608 is positioned so that the internal edge of the annular contact element 608 is adjacent to the external cylindrical surface of the filter medium 606. In the second configuration, the actuator (not shown) drives the contact element 608 to move axially to push filter residue from the external surface of the filter medium to the opening 611 and into the residue collection chamber 607. The contact element may be rigidly connected to the moveable member 605 and a single actuator (e.g. a linear actuator) may move both the moveable member 605 and contact element 608 together.

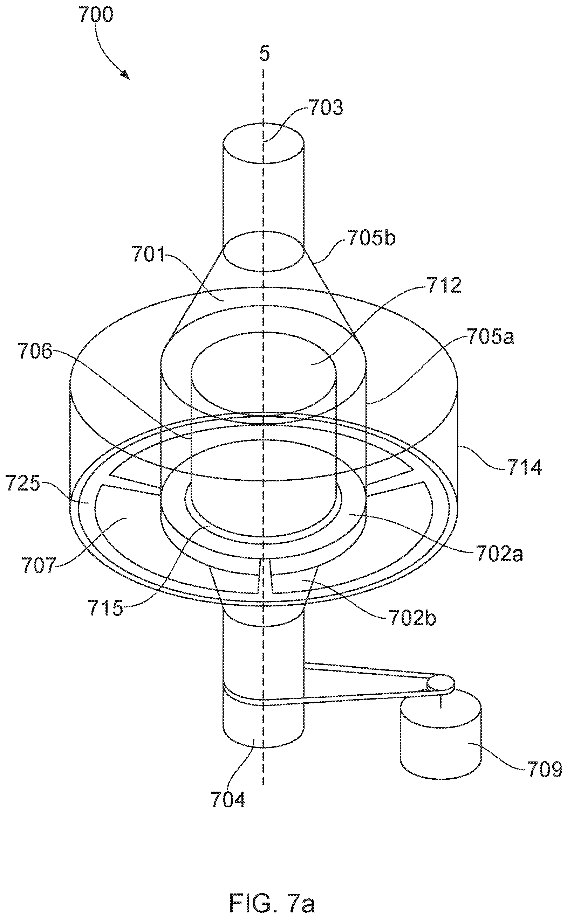

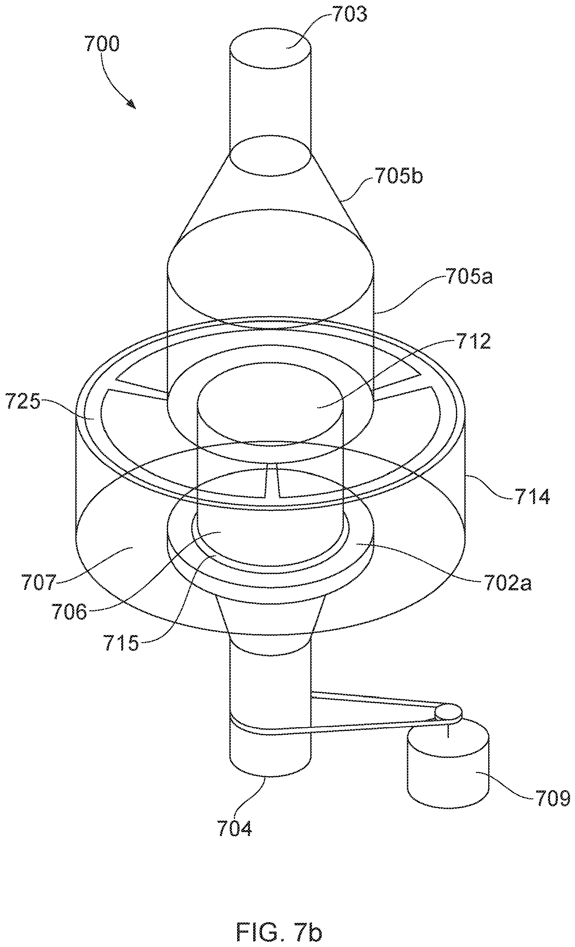

Referring to figure 7a and 7b, an alternative microparticle filter 700 is shown as a schematic isometric projection. The microparticle filter 700 comprises a filter chamber 701 defined by the chamber wall and the moveable member. The chamber wall comprises one frustrum 702b, and base wall 702a. One end of the frustrum 702b is adjacent to the base wall 702a, the other end of the frustrum defines an outlet 704. Moveable member comprises cylindrical wall 705a and frustrum 705b at the inlet end of the filter chamber 701. Inlet 703 is defined by frustrum 705b. A cylindrical filter medium 706 is positioned within the filter chamber 701 and is rotatably mounted to the base wall 713 by a sealed rotary bearing 715. The cylindrical filter medium 706 is also connected to the frustrum 702b. The cylindrical filter medium 706 comprises porous cylindrical walls and a non-porous end wall 712.

Frustrum 705b is configured to deliver effluent into chamber 701 between the cylindrical wall 705a of the moveable member and filter medium 706. Frustrum 702b channels filtered effluent from the internal volume of filter medium 706 to the outlet 704. The central axis of the cylindrical filter medium 706 is coaxial with a filter axis 5 that passes through the centre of the filter chamber 701.

The moveable member is actuated to move vertically between the first and second configuration. In the first configuration, shown in figure 7a, the cylindrical wall 705a of the moveable member is sealed against the base wall 702a. In the second configuration, shown in figure 7b, the movable member is displaced in the axial direction relative to axis 5, away from the base wall 702a. In figure 7b this motion is represented vertically upwards. In the second configuration, the opening 711 extends between the circumference of the base wall 702a and the bottom of the cylindrical wall 705a of the movable member. The microparticle filter 700 comprises a filter residue removal apparatus, comprising the rotatable mounting of filter medium 706 with sealed rotary bearings 715 and actuator 709 to rotate the filter medium 706 via a connection to frustrum 702b. A filter residue collection chamber 707 is positioned radially outwards of opening 711 and extends substantially around the entire circumference of the filter chamber 701. The residue collection chamber 707 may additionally comprise a collection wall 714 which extends to a vertical height of at least the opening 711.

In operation, the microparticle filter 700 is placed in the first configuration as shown in figure 7a, with the cylindrical wall 705a of the moveable member against base wall 702a, closing the opening 711 so that the filter residue collection chamber 707 is inaccessible from within the filter chamber 701. Effluent enters the filter medium 706 from the inlet 703. The effluent is filtered as it passes through the cylindrical wall of filter medium 706 and exits the filter chamber through the frustrum 702b and outlet 704. During filtration of the effluent, filtered particles will accumulate as a filter residue on the outside of the cylindrical surface of the filter medium 706. After the supply of effluent has stopped, residual liquid in the filter chamber 701 is drained from the filter chamber via the outlet 704. Then the filter is placed in the second configuration as shown in figure 7b by moving the moveable member, vertically upwards away from the base wall 702a. Thus, providing the opening 711 between the moveable member and the filter chamber 701. The filter residue is then transferred from the internal surface of the cylindrical filter medium to the filter residue collection chamber 707 by the filter residue removal apparatus. The actuator 709 of the filter residue removal apparatus spins the filter medium 706 to throw residue out of the off the surface of the filter medium 706 through opening 711. The filter residue may then be thrown directly into filter residue collection chamber 707 or may be thrown into collection wall 714 and fall into the collection chamber 707. After the residue is transferred, the microparticle filter 700 may resume the first configuration to resume filtration of effluent.

The moveable member 705 comprises a transfer element 725 on a radially outer surface of the moveable member, positioned around the circumference at the bottom edge of cylindrical wall 705a. The transfer element 725 transfers filter residue stuck on the collection wall to a residue storage portion in the bottom of the collection chamber 707 when the movable member moves from the second configuration to the first configuration. Specifically, the transfer element may push residue accumulated on the collection walls 714 downwards into the residue storage portion 726 when the moveable member moves downward from the second configuration to the first configuration. The transfer element 725 is shown as a flexible blade that to conforms to the collection wall and is connected by three struts to the moveable member.

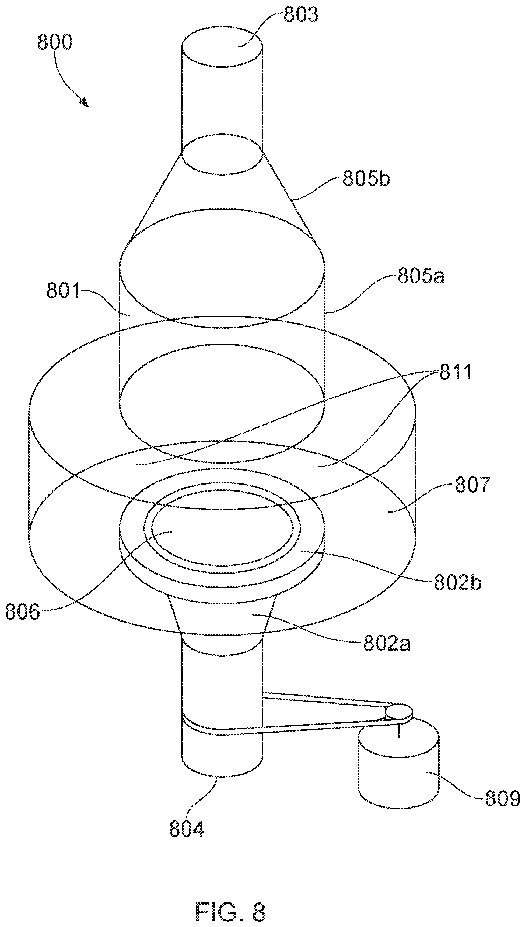

Referring to figure 8, an alternative microparticle filter 800 is shown as a schematic isometric projection in the first configuration. The microparticle filter 800 comprises substantially the same integers as those in figures 7a and 7b, comprising a filter chamber 801 defined by the chamber wall and the moveable member. The chamber wall comprises one frustrum 802a, and base wall 802b. The moveable member comprises cylindrical wall 805a and frustrum 805b at the inlet end of the filter chamber 701 with the exception of a planar filter medium 806. The planar filter medium 806 is rotatably mounted relative to the base wall 802b, within the filter chamber 801 and is driven by actuator 809. Operation of microparticle filter 800 is substantially the same as that of microparticle filter 700. Filtration occurs in the first configuration with the cylindrical wall 805a against the base wall 802b to seal chamber 801. The microparticle filter 800 is placed into the second configuration by moving the cylindrical wall 805a away from the base wall 802b and the filter medium 806 is rotated to throw residue off the first surface of the filter medium 806, through the opening 811 into collection chamber 807.

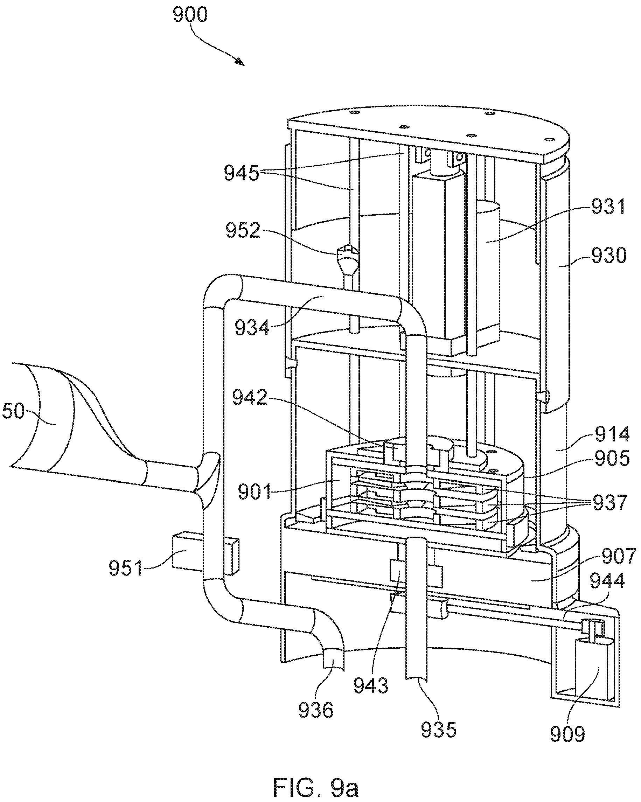

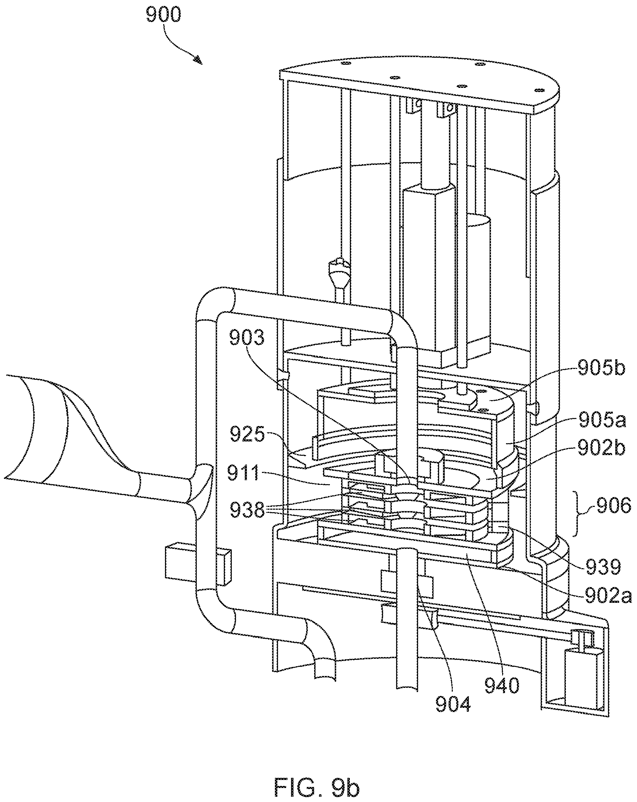

Referring to figures 9a and 9b, an alternative microparticle filter 900 is shown. The microparticle filter 900 comprises a cylindrical housing 930. Within the housing 930 is a linear actuator 931, a filter chamber 901, a filter residue collection chamber 907, an inlet pipe 934, an outlet pipe 935 and a bypass pipe 936. The inlet pipe 934 terminates at the inlet 903 of the filter chamber 901, the inlet pipe 934 delivers effluent from a textile treatment apparatus to the filter chamber 901. The outlet pipe 935 originates at the outlet 904 of the filter chamber 901 and delivers filtered effluent to a drain (not shown) or drum of the textile treatment apparatus (not shown). A bypass pipe 936 is also provided for bypassing the filter chamber 901 should microparticle filter 900 become blocked. The filter chamber 901 comprises a movable member 905, and chamber walls 902. The chamber walls 902 comprises a circular bottom wall 902a and a circular top wall 902b. Contained within the filter chamber 901 is the filter medium 906 which is shown as three circular filter elements 937. The filter elements are arranged horizontally, in a vertically stacked relationship, with their first surfaces facing upwards. Each filter element 937 is on a filter support 938, the filter elements 937 and the filter supports 938 have a central hole to allow unfiltered effluent to reach the first surface of each filter element 937. The filter supports 938 separate the outgoing filtered effluent from the incoming un-filtered effluent. Each filter support 938 guides the filtered effluent radially outwards to drain into channels 939. The channels 939 are positioned radially outwards from the filter elements and are circumferentially spaced. The channels 939 receive filtered effluent from each filter support 938 and move the filtered effluent downwards, through bottom wall 902a into drain chamber 940. Effluent exits from the drain chamber 940 via outlet 904. Opening are present between adjacent filter supports 938 and channels 939 so that filter residue can be thrown from the filter elements 937.

The moveable member 905 comprises a cylindrical wall 905a and an upper wall 905b. When the moveable member 905 is in the first configuration (shown in figure 9a), the bottom edge of the cylindrical wall 905a contacts the bottom wall 902a, and the upper wall 905b rests over top wall 902a. In the second configuration (shown in figure 9b) the moveable member 905 is raised above the top wall 902b so that all three filter elements are surrounded by an opening 911. The moveable member is moved vertically by linear actuator 931 which is positioned above the filter chamber 901. Guide rods 945 are provided in the housing 930 to control movement of the movable member 905. The filter chamber 901, filter medium 906 and outlet pipe 935 are rotatably mounted on sealed bearings 942, 943. The filter residue removal apparatus comprises a rotary actuator 909 and belt 944 to drive the rotation of the filter chamber 901, filter medium 906 and outlet pipe 935.

The portion of the housing 930 that is radially outwards of the opening 911 is considered to be a collection wall 914 that extends upwards from the filter residue collection chamber 907.

The collection wall 914 receives filter residue thrown from the filter medium 906. A transfer element 925 in the form of a rubber scraper blade is positioned on the bottom edge of cylindrical wall 905a facing radially outwards and contacting the collection wall 914.

In the first configuration the moveable member 905 is in the downward position shown in figure 9a and the filter chamber 901 is sealed. Effluent enters via a connection to a textile treatment apparatus 900, the valve 951 on the bypass pipe 936 is closed to direct effluent to the inlet pipe 934. Effluent enters the filter chamber 901 via inlet 903 and is delivered to each of the filter elements 937. The filter chamber 901, filter medium 906 and outlet pipe 935 are rotated by the rotary actuator 909 of the filter residue removal apparatus. Rotation of the filter chamber 901 may function as a centrifugal pump to push effluent through the filter elements 937 out of the filter chamber 901 the drain chamber. Filtered effluent is channelled by the filter supports 938 to the channels 939 and into the drain chamber 940. After effluent has drained from the filter chamber 901, the microparticle filter 900 is placed in the second configuration by raising the moveable member 905 with linear actuator 931. The filter medium 906 is then rotated at a sufficiently high speed to throw filter residue from the first surface of each of the filter elements 937, through opening 911, where it hits the collection wall 914.

When the moveable member 905 moves vertically downwards from the second configuration back to the first configuration, the transfer element 925 pushes filter residue accumulated on the collection wall 914 downwards to the filter residue collection chamber 907. The filter residue collection chamber 907 is in the form of two hemispherical trays which slide radially outwards from the housing 930 for emptying.

If the filter medium 906 becomes blocked an increase of fluid pressure will be detected by pressure sensor 952 on inlet pipe 934. If this occurs valve 951 can be opened so that effluent is supplied to the drain via bypass pipe 936.

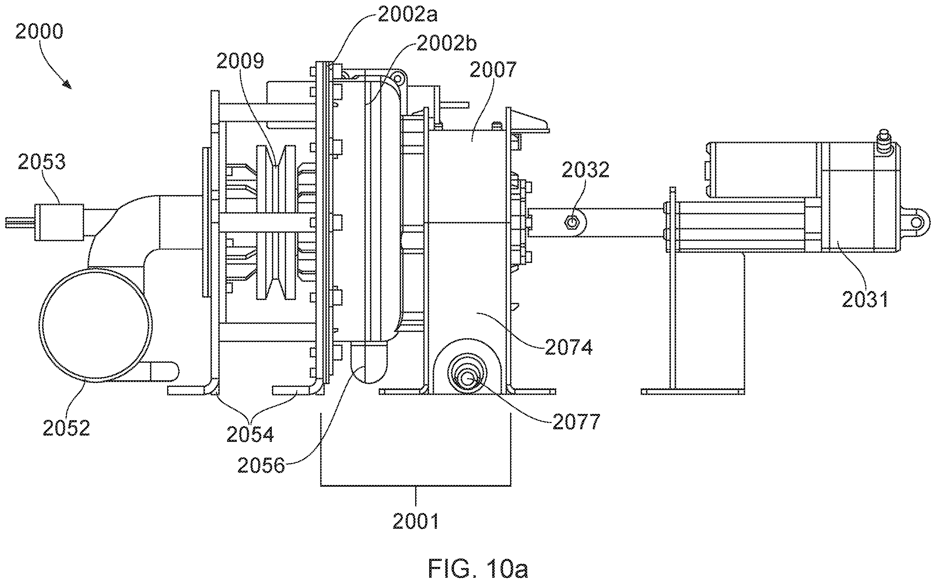

Referring to figures 10a, to 10d an alternative microparticle filter 2000 is shown. The microparticle filter 2000 comprises a filter chamber 2001, the filter chamber 2001 comprises a moveable member 2005 and chamber walls 2002. The moveable member 2005 is in the form of a hollow cylinder closed at one end. The movable member comprises a cylindrical sidewall 2005a and a circular end wall 2005b. The filter chamber walls comprise a planar end wall 2002a that is connected to a sidewall 2002b formed of a complex of cylinders of different diameters. The filter chamber sidewall 2002b is in a volute shape with a tangential port which extends to form an outlet 2004 from the filter chamber 2001. The outlet comprises valve 2004a to control flow of filtered effluent out of the filter chamber 2001. The filter chamber sidewall 2002b also comprises a secondary drain 2056 at the bottom of the filter chamber 2001. The chamber end wall 2002a comprises a central opening therein which is the inlet 2003 to the filter chamber 2001. In the inlet 2003 is a pipe 2070 which supplies effluent from a treatment apparatus into the filter chamber 2001 via the inlet 2003. The pipe 2070 is configured to rotate about central axis 5. In the embodiment exemplified in figures 10a -10h the central axis 5 is aligned in the horizontal direction. The pipe 2070 is mounted to the filter chamber 2001 via bearings 2067 and 2066, which connect to mount 2054. A seal 2076 is present between the filter chamber end wall 2002a and pipe 2070 to prevent filter leakage. The pipe 2070 is also connected to a supply pipe 2052 receive effluent from a textile treatment apparatus. A seal 2075 prevents leakage of effluent between the supply pipe 2052 and the pipe 2070. The supply pipe 2056 comprises a valve 2053 to control supply of effluent into the microparticle filter 2000.

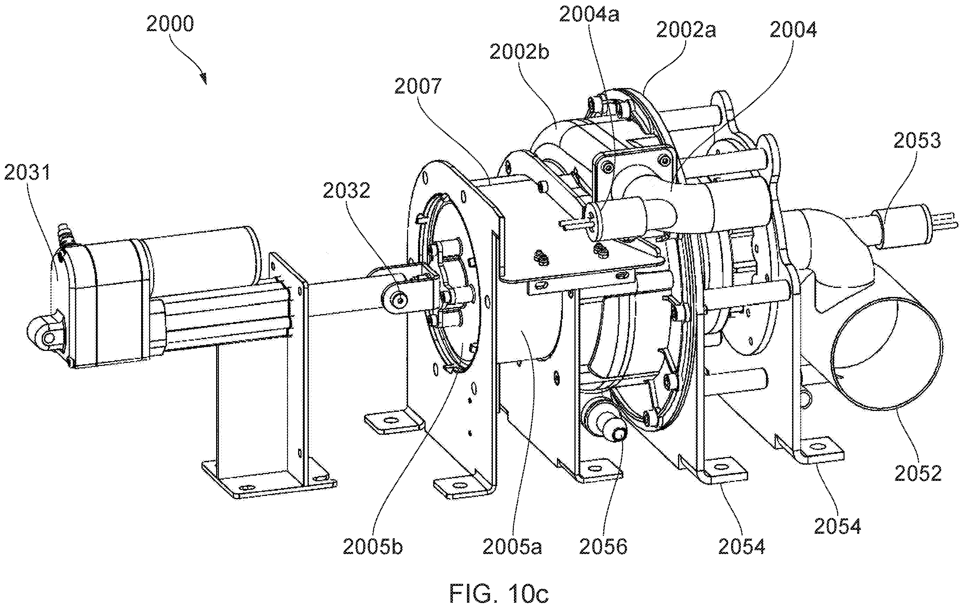

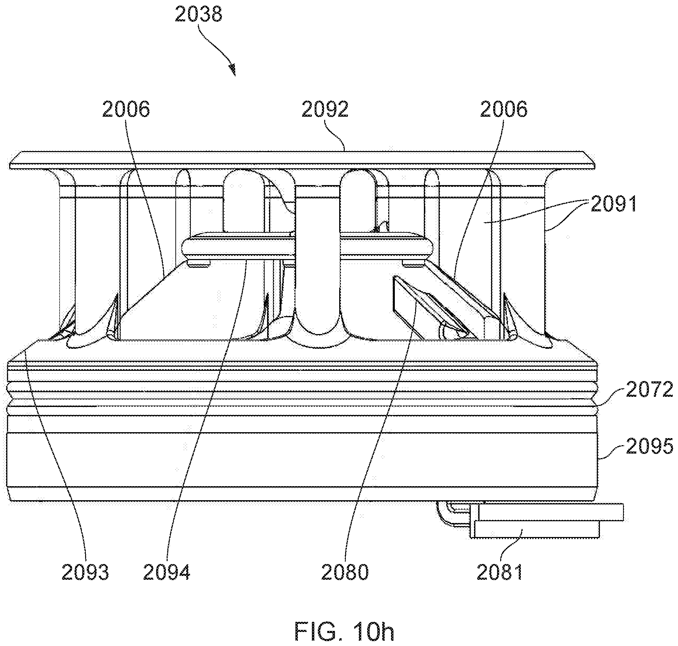

Inside the filter chamber 2001 is a frusto-conical filter medium 2006.The filter chamber 2001 is shown in detail in figures 10c to 10g. The external, outward facing surface of the filter medium 2006 is the first surface which receives unfiltered effluent from pipe 2070. The internal inward facing surface of the filter medium 2006 is the second surface of the filter medium 2006. The filter medium 2006 is supported on a filter support 2038. The filter support 2038 is configured to rotate about the central axis 5. The filter support 2038 is shown in greater detail in figure 10h. The filter support comprises two annular supports 2093, 2094 angled to support the filter medium 2006 in a frusto-conical shape. The filter support 2038 also comprises a plurality of blades 2091 proximal to and upstream of the first surface of the filter medium 2006. These blades, when rotated, function as an impellor and enhance the rotation of unfiltered effluent in the filter chamber 2001. This assists in pumping feed though the filter unit 2000. The blades connect to a disc 2092 which contacts the circular endwall of the movable member 2005b when the moveable member 2005 is in the first configuration. The outer perimeter of the disc 2092 may scrape any residue off the inner surface of the moveable member sidewall 2005a when the moveable member 2005 moves from the first configuration to the second configuration. The filter support 2038 also comprises an annular lip seal 2072 around the outer circumference. The lip seal 2072 contacts the inner circumference of the sidewall 2005a of the moveable member 2005 when the moveable member 2005 is in the first configuration. The filter support 2038 also comprises a smooth surface 2095 on the outer circumference for rotation against the seal 2039 fixed to the filter chamber sidewall 2002b. This helps to prevent leakage of effluent between the static filter chamber 2001 and the rotary filter support 2038. Also contained within the filter chamber 2001 is an impellor 2085 which extends from proximal to the second surface of the filter medium to the filter chamber end wall 2002a. The impellor 2085 comprises a plurality of blades with a profile that occupies most of the volume of the filter chamber 2001 downstream of the filter medium 2006. The impellor 2085 comprises a hollow bore with the pipe 2070 located therein. The impellor 2085 is configured to rotate around the central axis 5 and rotates with the pipe 2070, filter support 2038, moveable member 2005 and filter medium 2006. Rotation of the impellor 2085 drives filtered effluent from the volute part of the filter chamber 2001 and draws unfiltered effluent into the filter chamber 2001 via inlet 2003 and the pipe 2070.

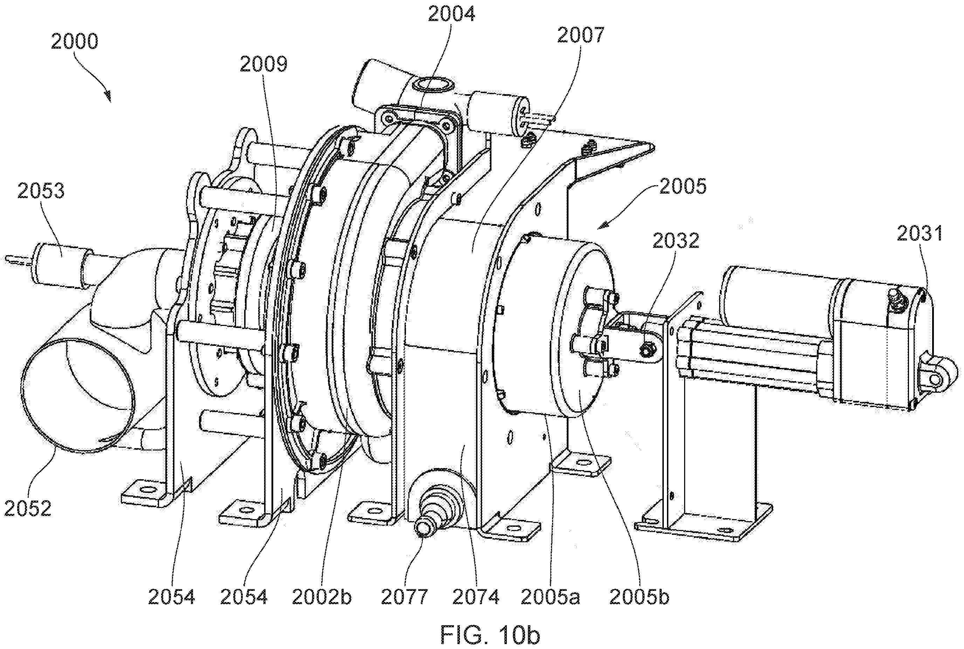

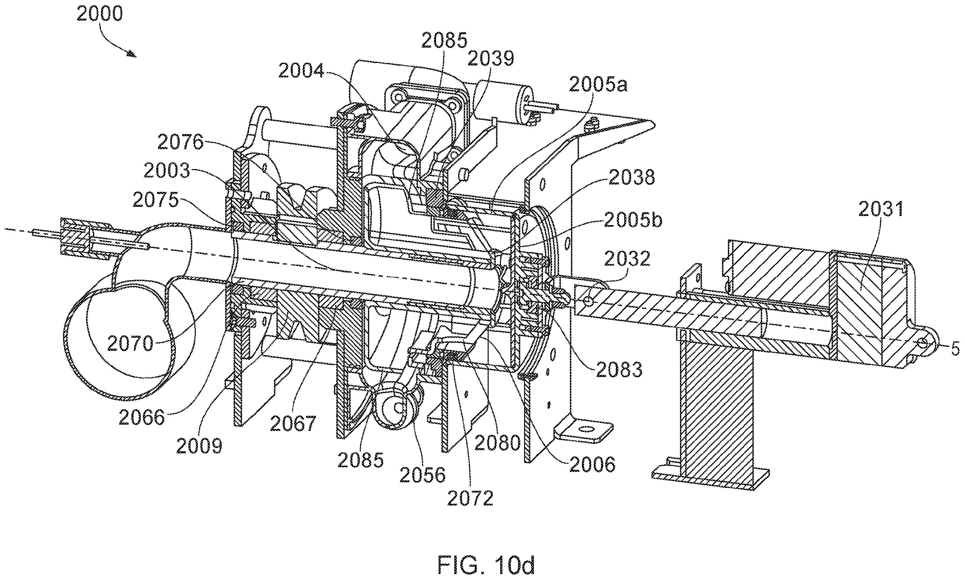

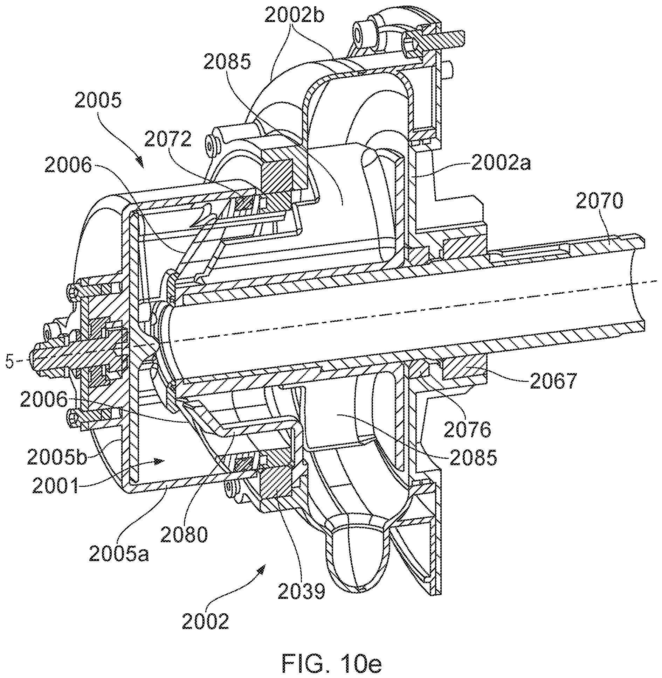

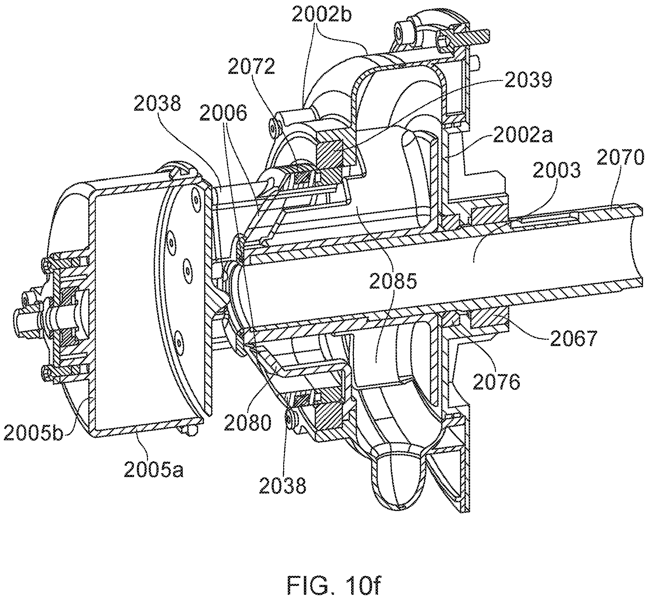

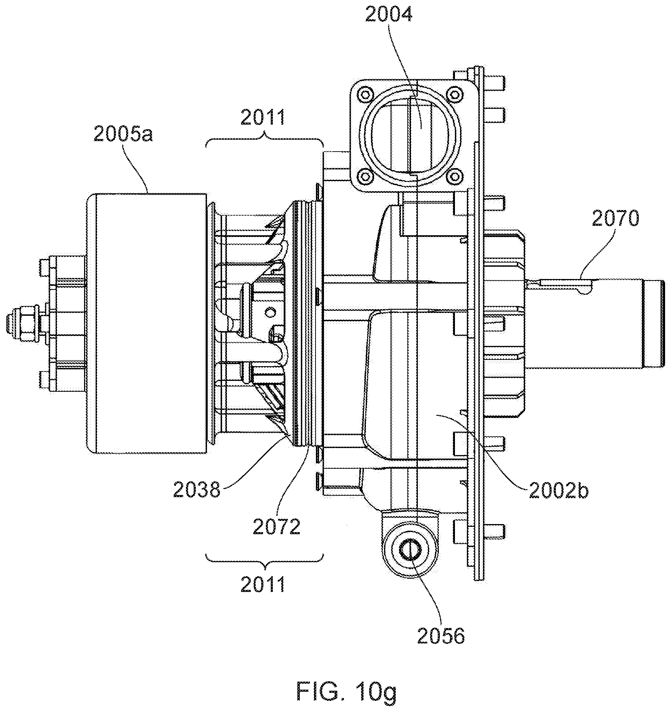

The moveable member 2005 is moved between the first and second configurations by linear actuator 2031 which is directly connected to the moveable member by linkage 2032 and bearing 2083. Bearing 2083 permits rotation around the central axis 5 so that the moveable member may rotate along with the filter support 2038 and other rotating components. The linkage ensures accurate alignment and therefore a water-tight seal with lip seal 2072 when the moveable member 2005 is in the first configuration. The moveable member 2005 is moved between the first and second configuration in the horizontal direction. When the movable member is in the second configuration, an annular opening 2011 is present between the movable member cylindrical sidewall 2005a and the filter chamber sidewall 2002b. Figure 10g shows the opening 2011. Figures 10a, 10c, 10d and 10e show the movable member 2005 in the first configuration and figures 10b, 10f and 10g show the moveable member 2005 in a second configuration.

Radially outwards of the opening 2011 is the filter residue collection chamber 2007, shown in figures 10a and 10b only. The filter residue collection chamber 2007 is generally cylindrical and extends 360 degrees around the central axis. A bottom quadrant of the filter residue collection chamber 2007 comprises a detachable portion in the form of a tray 2074. The tray 2074 can slide out from the microparticle filter 2000 for emptying. The filter residue collection chamber 2007 also comprises a tertiary drain 2077 from which any residual liquid in the filter residue collection chamber 2007 can drain.

The microparticle filter 2000 comprises a filter residue removal apparatus which is a rotary actuator (not shown), which typically may be an electric motor. The filter medium 2006 is rotatable around the central axis by the rotary actuator, so that filter residue can be removed from the first surface of the filter medium 2006 by rotating to throw the filter residue outwards. The rotary actuator is connected to the filter medium 2006 via a belt (not shown) and pulley 2009 connected to the pipe 2070. Rotation of the rotary actuator rotates the pulley, which in turn rotates the pipe 2070, impellor 2085, filter support 2038, filter medium 2006 and moveable member 2005 when it is in the first configuration.

Proximal to the second surface of the filter medium 2006 is a baffle 2080. This is shown in detail in figure 10h. The baffle 2080 is connected to the filter chamber sidewall 2002b by connecting portion 2081. The baffle 2080 is static and does not rotate with the filter medium 2006. The baffle 2080 serves to disrupt fluid flow around the filter medium 2006, preventing the blocking of the filter medium 2006 with filter residue.

In the first configuration, the moveable member 2005 is in contact with lip seal 2072 and the filter chamber 2001 is sealed so that effluent may enter only via the inlet 2003 and leave via the outlet 2004, and optionally the secondary drain 2056. Effluent from a textile treatment apparatus passes through supply pipe 2052. If valve 2053 is open, effluent passes into pipe 2070, where it is carried through the inlet 2003 into the filter chamber 2001 and along the pipe 2070 to the first surface of the filter medium 2006. The filter support 2038, filter medium 2006, impellor 2085, moveable member 2005 and pipe 2070 are all rotated together by rotation of the pulley 2009 by the belt (not shown) and rotary actuator (not shown) of the filter residue removal apparatus. Rotation of the impellor 2085 may function as a centrifugal pump to draw effluent through the microparticle chamber, through the filter medium 2006, and out of the filter chamber 2001 via outlet 2004. After the effluent from the textile treatment apparatus has been filtered by the filter medium 2006, flow of effluent is stopped by valve 2053. Residual effluent is allowed to drain from the filter chamber 2001 via secondary drain 2056. The microparticle filter 2000 is then placed in the second configuration by moving the moveable member 2005 to the second configuration with linear actuator 2031. The filter medium 2006, pipe 2070, impellor 2085 and filter support 2038 are then rotated at a sufficiently high speed to throw the filter residue from the first surface of the filter medium 2006, through opening 2011, where it where it lands in the filter residue collection chamber 2007 and falls to the bottom under gravity. Any residual liquid in the filter residue now in the filter residue collection chamber 2007 can be drained via tertiary drain 2077. The microparticle filter 2000 can be returned to the first configuration for further filtering of effluent. After one or more of the above cycles, the residue accumulated in the filter residue collection chamber 2007 can be removed by sliding the tray 2074 out the filter residue collection chamber 2007 and transferring the residue out of the tray 2074 for disposal.

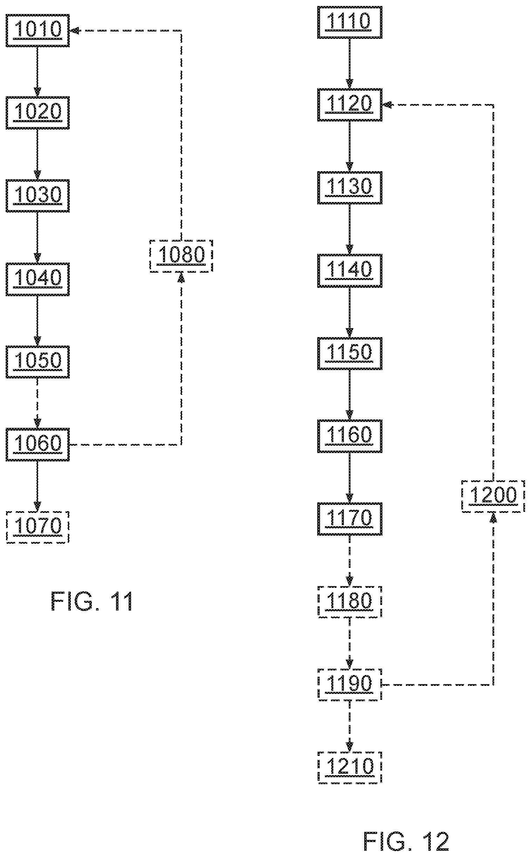

Referring to figure 11, a flow chart illustrating a method of filtering microparticles from effluent from a textile treatment apparatus according to the fourth aspect is shown. The method comprises a first step 1010 of supplying effluent from a textile treatment apparatus to a microparticle filter. The microparticle filter comprising a filter chamber and filter medium therein, a filter residue collection chamber external to the filter chamber and a filter residue removal apparatus. The microparticle filter may be any microparticle filter within the present disclosure. In a second step 1020 the effluent is filtered through the filter medium to form a microparticle containing filter residue in the filter chamber. In a third step 1030 the supply of effluent to the microparticle filter is stopped. In a fourth step 1040 the filter chamber is opened to provide access from the filter chamber to the filter residue collection chamber. In a fifth step 1050 a filter residue removal apparatus is automatically operated to remove the cellulose containing residue from the filter chamber to a filter residue collection chamber. In a sixth step 1060 the filter chamber is closed. Optionally the preceding steps may be repeated one or more times 1070. After one or more than one iteration of steps 1010 - 1060 the filter residue collection chamber may be emptied 1080 of filter residue.

Referring to figure 12, a flow chart illustrating an alternative method of filtering microparticles from effluent from a textile treatment apparatus according to the fifth aspect is shown. The method comprises a first step 1110 of providing a microparticle filter according to the first aspect. In a second step 1120, the microparticle filter is optionally placed in the first configuration by moving the movable member. In a third step 1130, the effluent from a textile treatment apparatus is supplied to the inlet of the microparticle filter. In a fourth step 1140, the effluent is filtered through the filter medium and filtered effluent passes out of the outlet. In a fifth step 1150, the supply of effluent is stopped. In a sixth step 1160, the microparticle filter is placed in the second configuration. In a seventh step 1170, the filter residue removal apparatus is operated to transfer filter residue from the filter medium to the filter residue collection chamber.

The method may additionally comprise the steps of moving the moveable member back to the first configuration 1180, resuming supply and filtering of effluent 1190, and optionally repeating the steps 1120 to 1190 one or more times 1200. After one or more than one iteration of steps 1110 - 1190 the filter residue collection chamber may be emptied 1210 of filter residue.

## Claims

1. A microparticle filter (700, 800, 900, 2000) suitable for filtering microparticles from effluent from a textile treatment apparatus, the filter comprising:

   a filter chamber (701, 801, 901, 2001) comprising chamber walls (902, 2002), an inlet (703, 803, 2003) and an outlet (704, 904, 2004);
   a filter medium (706, 806, 906, 2006) contained within the filter chamber (701, 801, 901, 2001), the filter medium (706, 806, 906, 2006) configured to filter microparticles from the effluent forming a filter residue and providing a filtered effluent to the outlet (704, 904, 2004);
   a filter residue collection chamber (707, 807, 907, 2007) located external to the filter chamber (701, 801, 901, 2001);
   a filter residue removal apparatus; and

   wherein the chamber walls (902, 2002) comprise an opening (811, 911, 2011) and a moveable member (705, 905, 2005) movable between a first and a second configuration; wherein:

   in the first configuration the moveable member (705, 905, 2005) cooperates with the chamber walls (902, 2002) to seal the filter chamber (701, 801, 901, 2001) so entry of the effluent into the filter chamber (701, 801, 901, 2001) is through the inlet (703, 803, 2003) only, and exit of the filtered effluent from the filter chamber (701, 801, 901, 2001) is through the outlet (704, 904, 2004) only; and
   in the second configuration the moveable member (705, 905, 2005) has moved to provide an opening (811, 911, 2011) in the chamber walls (902, 2002) so that the filter residue removal apparatus is operable to remove filter residue from the within the filter chamber (701, 801, 901, 2001) to the filter residue collection chamber (707, 807, 907, 2007) through the opening (811, 911, 2011);
   **characterised in that**:

   the filter medium (706, 806, 906, 2006) comprises a central axis (5) through the centre of the filter medium (706, 806, 906, 2006) and the filter medium (706, 806, 906, 2006) is rotatable around the central axis (5); and the filter residue removal apparatus comprises a rotary actuator (709, 809, 909) configured to rotate the filter medium (706, 806, 906, 2006) to throw filter residue off the filter medium (706, 806, 906, 2006).

2. A microparticle filter according to claim 1, wherein the moveable member (705, 905, 2005) and the opening (811, 911, 2011) extend around the perimeter of the filter chamber (701, 801, 901, 2001).

3. A microparticle filter according to claim 1 or claim 2, wherein the filter residue collection chamber (707, 807, 907, 2007) extends around a perimeter of the filter chamber (701, 801, 901, 2001) and/or wherein the filter residue collection chamber (707, 807, 907, 2007) is or comprises a portion that is slidably removable from the microparticle filter.

4. A microparticle filter according to any preceding claim, wherein the moveable member (705, 905, 2005) is shaped as a frustrum, a cone, a cylinder, or a pyramid; and/or
   wherein the movable member moves linearly between the first and second configurations; and optionally wherein the moveable member (705, 905, 2005) moves linearly in the horizontal direction.

5. A microparticle filter according to any preceding claim, wherein the microparticle filter comprises a linear actuator (931, 2031) to move the moveable member (705, 905, 2005) between the first and second configurations; and optionally wherein the linear actuator (931, 2031) is connected directly to the moveable member (705, 905, 2005), and/or optionally wherein a rotatable linkage (2032) is present between the linear actuator (931, 2031) and the moveable member (705, 905, 2005).

6. A microparticle filter according to claim 1, wherein the inlet (703, 803, 2003) is coincident with the central axis (5) of the filter medium (706, 806, 906, 2006) and/or, wherein the outlet (704, 904, 2004) is positioned further radially outwards from the central axis (5) than the inlet (703, 803, 2003).

7. A microparticle filter according to claim 1, wherein the filter chamber (701, 801, 901, 2001) comprises a first end wall and an opposed second end wall, wherein both ends are coincident with the central axis (5) and the inlet (703, 803, 2003) is arranged at the first end wall of the filter chamber (701, 801, 901, 2001), and optionally wherein the second end wall is comprised as part of the moveable member (705, 905, 2005); and optionally wherein the filter chamber (701, 801, 901, 2001) comprises one or more sidewalls between the first and second end walls, and wherein the outlet (704, 904, 2004) is in the sidewall of the filter chamber (701, 801, 901, 2001); and

wherein the outlet (704, 904, 2004) is between the filter medium (706, 806, 906, 2006) and the first end wall,
and/or wherein the outlet (704, 904, 2004) is adjacent to the first end wall of the filter chamber (701, 801, 901, 2001);
and/or wherein the sidewall is circular when viewed in a cross-section perpendicular to the central axis (5) and the outlet (704, 904, 2004) is aligned parallel to a tangent of the sidewall cross section.

8. A microparticle filter according to any preceding claim, wherein an impellor (2085) or impellor blades are rotatably mounted in the filter chamber (701, 801, 901, 2001); and optionally

wherein the impellor (2085) or impellor blades are positioned downstream of the filter medium (706, 806, 906, 2006) and optionally
wherein the impellor (2085) or impellor blades are positioned adjacent to and radially inwards of the outlet (704, 904, 2004) and optionally
wherein the impellor (2085) or impellor blades are arranged to rotate with the filter medium (706, 806, 906, 2006).

9. A microparticle filter according to any preceding claim, wherein the filter chamber (701, 801, 901, 2001) comprises a baffle (2080); the baffle (2080) is located within the filter chamber (701, 801, 901, 2001) and rigidly connected to the chamber walls (902, 2002), wherein the baffle (2080) is adjacent to the filter medium (706, 806, 906, 2006), optionally wherein the filter medium (706, 806, 906, 2006) comprises a second surface which is the surface from which filtered effluent passes during filtration, and the baffle (2080) is adjacent to the second surface of the filter medium (706, 806, 906, 2006).

10. A microparticle filter according to any preceding claim, comprising a filter support (2038) in the filter chamber (701, 801, 901, 2001), wherein the filter medium (706, 806, 906, 2006) is retained in a three-dimensional shape by the filter support (2038); and/or wherein the filter medium (706, 806, 906, 2006) comprises a first surface on which filter residue accumulates during filtration and the first surface of the filter medium (706, 806, 906, 2006) faces radially outwards from the central axis (5).

11. A microparticle filter according to any preceding claim wherein the microparticle filter is operable to drain the effluent from the filter chamber (701, 801, 901, 2001) in the first configuration to reduce the water content of the filter residue.

12. A microparticle filter according to any preceding claim, wherein the filter residue removal apparatus is operable to remove filter residue with the filter chamber (701, 801, 901, 2001) empty of effluent; and/or
wherein the filter residue removal apparatus is operable to remove filter residue when the filter residue is in a non-flowable state and/or wherein the filter residue removal apparatus is operable to remove filter residue when the filter residue has been dewatered.

13. A microparticle filter according to any preceding claim, wherein the filter residue collection chamber (707, 807, 907, 2007) is positioned radially outwards of the filter medium (706, 806, 906, 2006) with respect to the central axis (5) and/or
wherein filter residue collection chamber (707, 807, 907, 2007) surrounds the periphery of the filter medium (706, 806, 906, 2006).

14. A microparticle filter according to any preceding claim, wherein the filter residue removal apparatus comprises an actuator to rotate the filter medium (706, 806, 906, 2006) about a central axis (5) to centrifugally move residue to the filter residue collection chamber (707, 807, 907, 2007); optionally, wherein the filter residue collection chamber (707, 807, 907, 2007) comprises a collection wall (914) aligned parallel to the central axis (5) and arranged radially outwards of the moveable member (705, 905, 2005), and optionally extends 360 degrees around the central axis (5).

15. A microparticle filter according to any preceding claim, wherein the filter residue collection chamber (707, 807, 907, 2007) is detachable from the filter chamber (701, 801, 901, 2001) to assist a user to empty residue therefrom and/or
wherein the filter medium (706, 806, 906, 2006) is removable from the filter chamber (701, 801, 901, 2001) to assist cleaning of the filter medium (706, 806, 906, 2006) by a user.

16. A textile treatment apparatus comprising the microparticle filter according to any previous claim, optionally comprising a drum, the drum having a capacity from 150 L to 20,000 L.

17. Use of the microparticle filter (700, 800, 900, 2000) or textile treatment apparatus according to any previous claims, for filtering microparticles from an effluent stream comprising effluent from treated textiles; optionally

wherein the textiles comprise cotton or polycotton; and/or optionally wherein the treated textiles are textiles being treated by washing; and/or optionally wherein the use of the microparticle filter or textile treatment apparatus is for filtering cellulose microparticles.

18. A method of filtering microparticles from effluent from a textile treatment apparatus comprising:

    i. providing a microparticle filter (700, 800, 900, 2000) according to any of claims 1 to 15;
    ii. placing the microparticle filter in the first configuration;
    iii. supplying effluent from a textile treatment apparatus to the inlet (703, 803, 2003) of the microparticle filter;
    iv. filtering the effluent through the filter medium (706, 806, 906, 2006) and passing the filtered effluent to the outlet (704, 904, 2004);
    v. stopping the supply of effluent;
    vi. placing the microparticle filter in the second configuration;
    vii. operating the filter residue removal apparatus to transfer filter residue from the filter chamber (701, 801, 901, 2001) to the filter residue collection chamber (707, 807, 907, 2007).

19. A method according to claim 18, further comprising the subsequent steps of:

    vii. moving the moveable member (705, 905, 2005) back to the first configuration;
    ix. resuming supply and filtering of effluent, and optionally

    further comprising the steps:

    x. repeating steps ii. to vii. one or more times;
    xi. emptying the microparticle containing residue from the residue collection chamber (707, 807, 907, 2007).

20. A method according any of claims 18 or 19, wherein the filter residue is dewatered between steps v and vi; optionally, wherein dewatering may comprise any of rotating the filter medium (706, 806, 906, 2006) to centrifugally remove water from the residue, blowing air through the residue, heating the residue or applying a vacuum to the residue or any combination thereof, and optionally, wherein the filter residue is dewatered in the filter chamber (701, 801, 901, 2001).

**Patentansprüche**

1. Mikropartikelfilter (700, 800, 900, 2000), der zum Filtern von Mikropartikeln aus Abwasser aus einem Textilbehandlungsgerät geeignet ist, wobei der Filter umfasst:

    eine Filterkammer (701, 801, 901, 2001), die Kammerwände (902, 2002), einen Einlass (703, 803, 2003) und einen Auslass (704, 904, 2004) umfasst;
    ein Filtermedium (706, 806, 906, 2006), das in der Filterkammer (701, 801, 901, 2001) enthalten ist, wobei das Filtermedium (706, 806, 906, 2006) dazu konfiguriert ist, Mikropartikel aus dem Abwasser zu filtern, wobei ein Filterrückstand gebildet wird und ein gefiltertes Abwasser dem Auslass (704, 904, 2004) bereitgestellt wird;
    eine Sammelkammer (707, 807, 907, 2007) für Filterrückstände, die sich außerhalb der Filterkammer (701, 801, 901, 2001) befindet;
    ein Gerät zur Entfernung von Filterrückständen; und
    wobei die Kammerwände (902, 2002) eine Öffnung (811, 911, 2011) und ein bewegliches Element (705, 905, 2005) umfassen, das zwischen einer ersten und einer zweiten Konfiguration beweglich ist; wobei:

        in der ersten Konfiguration das bewegliche Element (705, 905, 2005) mit den Kammerwänden (902, 2002) zusammenwirkt, um die Filterkammer (701, 801, 901, 2001) abzudichten, so dass der Eintritt des Abwassers in die Filterkammer (701, 801, 901, 2001) nur durch den Einlass (703, 803, 2003) erfolgt und der Austritt des gefilterten Abwassers aus der Filterkammer (701, 801, 901, 2001) nur durch den Auslass (704, 904, 2004) erfolgt; und
        in der zweiten Konfiguration sich das bewegliche Element (705, 905, 2005) bewegt hat, um eine Öffnung (811, 911, 2011) in den Kammerwänden (902, 2002) bereitzustellen, so dass das Gerät zur Entfernung von Filterrückständen betriebsfähig ist, um Filterrückstände aus dem Inneren der Filterkammer (701, 801, 901, 2001) durch die Öffnung (811, 911, 2011) zur Sammelkammer (707, 807, 907, 2007) für Filterrückstände zu entfernen;
        **dadurch gekennzeichnet, dass**:

            das Filtermedium (706, 806, 906, 2006) eine Mittelachse (5) durch die Mitte des Filtermediums (706, 806, 906, 2006) umfasst und das Filtermedium (706, 806, 906, 2006) um die Mittelachse (5) drehbar ist; und

das Gerät zu Entfernung von Filterrückständen einen Drehantrieb (709, 809, 909) umfasst, der dazu konfiguriert ist, das Filtermedium (706, 806, 906, 2006) zu drehen, um Filterrückstände aus dem Filtermedium (706, 806, 906, 2006) abzuwerfen.

2. Mikropartikelfilter nach Anspruch 1, wobei sich das bewegliche Element (705, 905, 2005) und die Öffnung (811, 911, 2011) um den Umfang der Filterkammer (701, 801, 901, 2001) erstrecken.

3. Mikropartikelfilter nach Anspruch 1 oder Anspruch 2, wobei sich die Sammelkammer (707, 807, 907, 2007) für Filterrückstände um einen Umfang der Filterkammer (701, 801, 901, 2001) erstreckt und/oder wobei die Sammelkammer (707, 807, 907, 2007) für Filterrückstände ein Abschnitt ist oder einen Abschnitt umfasst, der verschiebbar vom Mikropartikelfilter entfernbar ist.

4. Mikropartikelfilter nach einem der vorhergehenden Ansprüche, wobei das bewegliche Element (705, 905, 2005) die Form eines Kegelstumpfs, eines Kegels, eines Zylinders oder einer Pyramide hat; und/oder wobei sich das bewegliche Element linear zwischen der ersten und der zweiten Konfiguration bewegt; und optional wobei sich das bewegliche Element (705, 905, 2005) linear in der horizontalen Richtung bewegt.

5. Mikropartikelfilter nach einem der vorhergehenden Ansprüche, wobei der Mikropartikelfilter einen Linear-Stellantrieb (931, 2031) umfasst, um das bewegliche Element (705, 905, 2005) zwischen der ersten und zweiten Konfiguration zu bewegen; und optional wobei der Linear-Stellantrieb (931, 2031) direkt mit dem beweglichen Element (705, 905, 2005) verbunden ist und/oder optional wobei eine drehbare Verbindung (2032) zwischen dem Linear-Stellantrieb (931, 2031) und dem beweglichen Element (705, 905, 2005) vorhanden ist.

6. Mikropartikelfilter nach Anspruch 1, wobei der Einlass (703, 803, 2003) mit der Mittelachse (5) des Filtermediums (706, 806, 906, 2006) zusammenfällt und/oder wobei der Auslass (704, 904, 2004) weiter radial nach außen von der Mittelachse (5) als der Einlass (703, 803, 2003) positioniert ist.

7. Mikropartikelfilter nach Anspruch 1, wobei die Filterkammer (701, 801, 901, 2001) eine erste Endwand und eine gegenüberliegende zweite Endwand umfasst, wobei beide Enden mit der Mittelachse (5) zusammenfallen und der Einlass (703, 803, 2003) an der ersten Endwand der Filterkammer (701, 801, 901, 2001) angeordnet ist und optional wobei die zweite Endwand Teil des beweglichen Elements (705, 905, 2005) ist; und optional wobei die Filterkammer (701, 801, 901, 2001) eine oder mehrere Seitenwände zwischen der ersten und der zweiten Endwand umfasst und wobei sich der Auslass (704, 904, 2004) in der Seitenwand der Filterkammer (701, 801, 901, 2001) befindet; und

wobei sich der Auslass (704, 904, 2004) zwischen dem Filtermedium (706, 806, 906, 2006) und der ersten Endwand befindet, und/oder wobei der Auslass (704, 904, 2004) an die erste Endwand der Filterkammer (701, 801, 901, 2001) angrenzt; und/oder wobei die Seitenwand beim Betrachten in einem Querschnitt senkrecht zur Mittelachse (5) kreisförmig ist und der Auslass (704, 904, 2004) parallel zu einer Tangente des Seitenwandquerschnitts ausgerichtet ist.

8. Mikropartikelfilter nach einem der vorhergehenden Ansprüche, wobei ein Laufrad (2085) oder Laufradschaufeln drehbar in der Filterkammer (701, 801, 901, 2001) montiert sind; und optional

wobei das Laufrad (2085) oder die Laufradschaufeln stromabwärts des Filtermediums (706, 806, 906, 2006) positioniert sind und optional wobei das Laufrad (2085) oder die Laufradschaufeln angrenzend an den Auslass (704, 904, 2004) und radial nach innen von diesem positioniert sind und optional wobei das Laufrad (2085) oder die Laufradschaufeln dazu angeordnet sind, sich mit dem Filtermedium (706, 806, 906, 2006) zu drehen.

9. Mikropartikelfilter nach einem der vorhergehenden Ansprüche, wobei die Filterkammer (701, 801, 901, 2001) eine Ablenkplatte (2080) umfasst; wobei sich die Ablenkplatte (2080) innerhalb der Filterkammer (701, 801, 901, 2001) befindet und starr mit den Kammerwänden (902, 2002) verbunden ist, wobei die Ablenkplatte (2080) an das Filtermedium (706, 806, 906, 2006) angrenzt, optional wobei das Filtermedium (706, 806, 906, 2006) eine zweite Oberfläche umfasst, die die Oberfläche ist, von der gefiltertes Abwasser während der Filtration austritt, und die Ablenkplatte (2080) an die zweite Oberfläche des Filtermediums (706, 806, 906, 2006) angrenzt.

10. Mikropartikelfilter nach einem der vorhergehenden Ansprüche, umfassend einen Filterträger (2038) in der Filterkammer (701, 801, 901, 2001), wobei das Filtermedium (706, 806, 906, 2006) in dreidimensionaler Form durch den Filterträger (203 8) gehalten wird; und/oder wobei das Filtermedium (706, 806, 906, 2006) eine erste Oberfläche umfasst, auf der sich Filterrückstände während der Filtration ansammeln, und die erste Oberfläche des Filtermediums (706, 806, 906, 2006) von der Mittelachse (5) radial nach außen zeigt.

11. Mikropartikelfilter nach einem der vorhergehenden Ansprüche, wobei der Mikropartikelfilter dazu betriebsfähig ist, das Abwasser aus der Filterkammer (701, 801, 901, 2001) in der ersten Konfiguration abzuleiten, um den Wassergehalt der Filterrückstände zu reduzieren.

12. Mikropartikelfilter nach einem der vorhergehenden Ansprüche, wobei das Gerät zur Entfernung von Filterrückständen dazu betriebsfähig ist, Filterrückstände zu entfernen, während die Filterkammer (701, 801, 901, 2001) kein Abwasser enthält; und/oder wobei das Gerät zur Entfernung von Filterrückständen dazu betriebsfähig ist, Filterrückstände zu entfernen, wenn sich die Filterrückstände in einem nicht fließfähigen Zustand befinden, und/oder wobei das Gerät zur Entfernung von Filterrückständen dazu betriebsfähig ist, Filterrückstände zu entfernen, wenn die Filterrückstände entwässert worden sind.

13. Mikropartikelfilter nach einem der vorhergehenden Ansprüche, wobei die Sammelkammer (707, 807, 907, 2007) für Filterrückstände in Bezug auf die Mittelachse (5) radial nach außen von dem Filtermedium (706, 806, 906, 2006) positioniert ist und/oder wobei die Sammelkammer (707, 807, 907, 2007) für Filterrückstände den Umfang des Filtermediums (706, 806, 906, 2006) umgibt.

14. Mikropartikelfilter nach einem der vorhergehenden Ansprüche, wobei das Gerät zur Entfernung von Filterrückständen einen Stellantrieb umfasst, um das Filtermedium (706, 806, 906, 2006) um eine Mittelachse (5) zu drehen, um Rückstände zentrifugal zur Sammelkammer (707, 807, 907, 2007) für Filterrückstände zu bewegen; optional wobei die Sammelkammer (707, 807, 907, 2007) für Filterrückstände eine Sammelwand (914) umfasst, die parallel zur Mittelachse (5) ausgerichtet ist und radial nach außen von dem beweglichen Element (705, 905, 2005) angeordnet ist, und sich optional 360 Grad um die Mittelachse (5) erstreckt.

15. Mikropartikelfilter nach einem der vorhergehenden Ansprüche, wobei die Sammelkammer (707, 807, 907, 2007) für Filterrückstände von der Filterkammer (701, 801, 901, 2001) abnehmbar ist, um einem Benutzer dabei zu unterstützen, Rückstände daraus zu entleeren und/oder wobei das Filtermedium (706, 806, 906, 2006) aus der Filterkammer (701, 801, 901, 2001) entfernbar ist, um die Reinigung des Filtermediums (706, 806, 906, 2006) durch einen Benutzer zu unterstützen.

16. Textilbehandlungsgerät, umfassend den Mikropartikelfilter nach einem der vorhergehenden Ansprüche, optional umfassend eine Trommel, wobei die Trommel ein Fassungsvermögen von 150 1 bis 20.000 1 aufweist.

17. Verwendung des Mikropartikelfilters (700, 800, 900, 2000) oder des Textilbehandlungsgeräts nach einem der vorhergehenden Ansprüche zum Filtern von Mikropartikeln aus einem Abwasserstrom, der Abwasser von behandelten Textilien umfasst; optional wobei die Textilien Baumwolle oder Polycotton umfassen; und/oder optional wobei es sich bei den behandelten Textilien um Textilien handelt, die durch Waschen behandelt werden; und/oder optional wobei die Verwendung des Mikropartikelfilters oder des Textilbehandlungsgeräts zum Filtern von Cellulose-Mikropartikeln dient.

18. Verfahren zum Filtern von Mikropartikeln aus Abwasser aus einem Textilbehandlungsgerät, umfassend:

i. Bereitstellen eines Mikropartikelfilters (700, 800, 900, 2000) nach einem der Ansprüche 1 bis 15;
ii. Platzieren des Mikropartikelfilters in der ersten Konfiguration;
iii. Zuführen von Abwasser aus einem Textilbehandlungsgerät zum Einlass (703, 803, 2003) des Mikropartikelfilters;
iv. Filtern des Abwassers durch das Filtermedium (706, 806, 906, 2006) und Leiten des gefilterten Abwassers zum Auslass (704, 904, 2004);
v. Stoppen der Abwasserzufuhr;
vi. Platzieren des Mikropartikelfilters in der zweiten Konfiguration;
vii. Betreiben des Geräts zur Entfernung von Filterrückständen, um Filterrückstände von der Filterkammer (701, 801, 901, 2001) in die Sammelkammer (707, 807, 907, 2007) für Filterrückstände zu überführen.

19. Verfahren nach Anspruch 18, ferner umfassend die nachfolgenden Schritte:

vii. Zurückbewegen des beweglichen Elements (705, 905, 2005) in die erste Konfiguration;
ix. Wiederaufnahme der Zufuhr und Filterung des Abwassers und optional

ferner umfassend die Schritte:

> x. Wiederholen der Schritte ii. bis vii. einmal oder mehrmals;
> xi. Entleeren der Mikropartikel enthaltenden Rückstände aus der Sammelkammer (707, 807, 907, 2007) für Rückstände.

20. Verfahren nach einem der Ansprüche 18 oder 19, wobei die Filterrückstände zwischen den Schritten v und vi entwässert werden; optional wobei das Entwässern jedes von Drehen des Filtermediums (706, 806, 906, 2006), um Wasser zentrifugal aus dem Rückständen zu entfernen, Blasen von Luft durch die Rückstände, Erhitzen der Rückstände oder Anlegen eines Vakuums an die Rückstände oder jede Kombination davon umfassen kann und optional wobei die Filterrückstände in der Filterkammer (701, 801, 901, 2001) entwässert werden.

## Revendications

1. Filtre à microparticules (700, 800, 900, 2000) approprié pour filtrer les microparticules à partir d'un effluent provenant d'un appareil de traitement textile, le filtre comprenant :

> une chambre de filtration (701, 801, 901, 2001) comprenant des parois (902, 2002) de chambre, une entrée (703, 803, 2003) et une sortie (704, 904, 2004) ;
> un milieu filtrant (706, 806, 906, 2006) contenu à l'intérieur de la chambre de filtration (701, 801, 901, 2001), le milieu filtrant (706, 806, 906, 2006) étant conçu pour filtrer les microparticules à partir de l'effluent formant un résidu de filtre et fournissant un effluent filtré à la sortie (704, 904, 2004) ;
> une chambre de collecte de résidus de filtre (707, 807, 907, 2007) située à l'extérieur de la chambre de filtration (701, 801, 901, 2001) ;
> un appareil d'élimination de résidus de filtre ; et lesdites parois (902, 2002) de chambre comprenant une ouverture (811, 911, 2011) et un élément mobile (705, 905, 2005) qui est mobile entre une première et une seconde configuration ;
> dans la première configuration, ledit élément mobile (705, 905, 2005) coopérant avec les parois (902, 2002) de chambre pour assurer l'étanchéité de la chambre de filtration (701, 801, 901, 2001) afin que l'entrée de l'effluent dans la chambre de filtration (701, 801, 901, 2001) se fasse uniquement par l'entrée (703, 803, 2003), et que la sortie de l'effluent filtré de la chambre de filtration (701, 801, 901, 2001) se fasse uniquement par la sortie (704, 904, 2004) ; et
> dans la seconde configuration, ledit élément mobile (705, 905, 2005) s'étant déplacé pour fournir une ouverture (811, 911, 2011) dans les parois (902, 2002) de chambre afin que l'appareil d'élimination de résidus de filtre serve à éliminer le résidu de filtre de l'intérieur de la chambre de filtration (701, 801, 901, 2001) jusqu'à la chambre de collecte de résidus de filtre (707, 807, 907, 2007) à travers l'ouverture (811, 911, 2011) ;
> **caractérisé en ce que** :

> le milieu filtrant (706, 806, 906, 2006) comprend un axe central (5) passant par le centre du milieu filtrant (706, 806, 906, 2006) et le milieu filtrant (706, 806, 906, 2006) peut tourner autour de l'axe central (5) ; et l'appareil d'élimination de résidus de filtre comprenant un actionneur rotatif (709, 809, 909) conçu pour faire tourner le milieu filtrant (706, 806, 906, 2006) afin de débarrasser le milieu filtrant (706, 806, 906, 2006) du résidu de filtre.

2. Filtre à microparticules selon la revendication 1, ledit élément mobile (705, 905, 2005) et ladite ouverture (811, 911, 2011) s'étendant autour du périmètre de la chambre de filtration (701, 801, 901, 2001).

3. Filtre à microparticules selon la revendication 1 ou la revendication 2, ladite chambre de collecte de résidus de filtre (707, 807, 907, 2007) s'étendant autour d'un périmètre de la chambre de filtration (701, 801, 901, 2001) et/ou ladite chambre de collecte de résidus de filtre (707, 807, 907, 2007) étant ou comprenant une partie qui peut être retirée de manière coulissante du filtre à microparticules.

4. Filtre à microparticules selon une quelconque revendication précédente, ledit élément mobile (705, 905, 2005) étant façonné sous la forme d'un tronc de cône, d'un cône, d'un cylindre ou d'une pyramide ; et/ou ledit élément mobile se déplaçant linéairement entre les première et seconde configurations ; et éventuellement ledit élément mobile (705, 905, 2005) se déplaçant linéairement dans la direction horizontale.

5. Filtre à microparticules selon une quelconque revendication précédente, ledit filtre à microparticules comprenant un actionneur linéaire (931, 2031) pour déplacer l'élément mobile (705, 905, 2005) entre les première et seconde configurations ; et éventuellement ledit actionneur linéaire (931, 2031) étant raccordé directement à l'élément mobile (705, 905, 2005), et/ou éventuellement, une liaison rotative (2032) étant présente entre l'actionneur linéaire (931, 2031) et l'élément mobile (705, 905, 2005).

**6.** Filtre à microparticules selon la revendication 1, ladite entrée (703, 803, 2003) coïncidant avec l'axe central (5) du milieu filtrant (706, 806, 906, 2006) et/ou, ladite sortie (704, 904, 2004) étant positionnée plus radialement vers l'extérieur de l'axe central (5) que l'entrée (703, 803, 2003).

**7.** Filtre à microparticules selon la revendication 1, ladite chambre de filtration (701, 801, 901, 2001) comprenant une première paroi d'extrémité et une seconde paroi d'extrémité opposée, lesdites deux extrémités coïncidant avec l'axe central (5) et ladite entrée (703, 803, 2003) étant agencée au niveau de la première paroi d'extrémité de la chambre de filtration (701, 801, 901, 2001), et éventuellement, ladite seconde paroi d'extrémité étant comprise en tant que partie de l'élément mobile (705, 905, 2005) ; et éventuellement ladite chambre de filtration (701, 801, 901, 2001) comprenant une ou plusieurs parois latérales entre les première et seconde parois d'extrémité, et ladite sortie (704, 904, 2004) étant dans la paroi latérale de la chambre de filtration (701, 801, 901, 2001) ; et

ladite sortie (704, 904, 2004) se situant entre le milieu filtrant (706, 806, 906, 2006) et la première paroi d'extrémité,
et/ou ladite sortie (704, 904, 2004) étant adjacente à la première paroi d'extrémité de la chambre de filtration (701, 801, 901, 2001) ;
et/ou ladite paroi latérale étant circulaire lorsqu'elle est vue dans une section transversale perpendiculaire à l'axe central (5) et ladite sortie (704, 904, 2004) étant alignée parallèlement à une tangente de la section transversale de paroi latérale.

**8.** Filtre à microparticules selon une quelconque revendication précédente, une roue (2085) ou des aubes de roue étant montées rotatives dans la chambre de filtration (701, 801, 901, 2001) ; et éventuellement

ladite roue (2085) ou lesdites aubes de roue étant positionnées en aval du milieu filtrant (706, 806, 906, 2006) et éventuellement
ladite roue (2085) ou lesdites aubes de roue étant positionnées à côté et radialement vers l'intérieur de la sortie (704, 904, 2004) et éventuellement
ladite roue (2085) ou lesdites aubes de roue étant agencées pour tourner avec le milieu filtrant (706, 806, 906, 2006).

**9.** Filtre à microparticules selon une quelconque revendication précédente, ladite chambre de filtration (701, 801, 901, 2001) comprenant un déflecteur (2080) ; ledit déflecteur (2080) étant situé à l'intérieur de la chambre de filtration (701, 801, 901, 2001) et raccordé rigidement aux parois (902, 2002) de chambre, ledit déflecteur (2080) étant adjacent au milieu filtrant (706, 806, 906, 2006), éventuellement ledit milieu filtrant (706, 806, 906, 2006) comprenant une seconde surface qui est la surface à partir de laquelle l'effluent filtré passe durant la filtration, et ledit déflecteur (2080) étant adjacent à la seconde surface du milieu filtrant (706, 806, 906, 2006).

**10.** Filtre à microparticules selon une quelconque revendication précédente, comprenant un support de filtre (2038) dans la chambre de filtration (701, 801, 901, 2001), ledit milieu filtrant (706, 806, 906, 2006) étant retenu dans une forme tridimensionnelle par le support de filtre (2038) ; et/ou ledit milieu filtrant (706, 806, 906, 2006) comprenant une première surface sur laquelle des résidus de filtre s'accumulent durant la filtration et ladite première surface du milieu filtrant (706, 806, 906, 2006) étant orientée radialement vers l'extérieur à partir de l'axe central (5).

**11.** Filtre à microparticules selon une quelconque revendication précédente, ledit filtre à microparticules servant à drainer l'effluent de la chambre de filtration (701, 801, 901, 2001) dans la première configuration pour réduire la teneur en eau du résidu de filtre.

**12.** Filtre à microparticules selon une quelconque revendication précédente, ledit appareil d'élimination de résidus de filtre servant à éliminer le résidu de filtre avec la chambre de filtration (701, 801, 901, 2001) vide d'effluent ; et/ou
ledit appareil d'élimination de résidus de filtre servant à éliminer le résidu de filtre lorsque le résidu de filtre est dans un état non fluide et/ou ledit appareil d'élimination de résidus de filtre servant à éliminer le résidu de filtre lorsque le résidu de filtre a été déshydraté.

**13.** Filtre à microparticules selon une quelconque revendication précédente, ladite chambre de collecte de résidus de filtre (707, 807, 907, 2007) étant positionnée radialement vers l'extérieur du milieu filtrant (706, 806, 906, 2006) par rapport à l'axe central (5) et/ou
ladite chambre de collecte de résidus de filtre (707, 807, 907, 2007) entourant la périphérie du milieu filtrant (706, 806, 906, 2006).

**14.** Filtre à microparticules selon une quelconque revendication précédente, ledit appareil d'élimination de résidus de filtre comprenant un actionneur pour faire tourner le milieu filtrant (706, 806, 906, 2006) autour d'un axe central (5) pour déplacer par centrifugation le résidu vers la chambre de collecte de résidus de filtre (707, 807, 907, 2007) ; éventuellement, ladite chambre de collecte de résidus de filtre (707, 807, 907, 2007) comprenant une paroi de collecte (914) alignée parallèlement à l'axe central (5) et agencée radialement vers l'extérieur de l'élément mobile (705, 905, 2005), et s'étendant éventuellement sur 360 degrés autour de l'axe central (5).

15. Filtre à microparticules selon une quelconque revendication précédente, ladite chambre de collecte de résidus de filtre (707, 807, 907, 2007) étant détachable de la chambre de filtration (701, 801, 901, 2001) pour aider un utilisateur à vider le résidu et/ou ledit milieu filtrant (706, 806, 906, 2006) pouvant être retiré de la chambre de filtration (701, 801, 901, 2001) pour faciliter le nettoyage du milieu filtrant (706, 806, 906, 2006) par un utilisateur.

16. Appareil de traitement textile comprenant le filtre à microparticules selon une quelconque revendication précédente, comprenant éventuellement un tambour, le tambour comportant une capacité de 150 L à 20 000 L.

17. Utilisation du filtre à microparticules (700, 800, 900, 2000) ou de l'appareil de traitement textile selon des quelconques revendications précédentes, pour filtrer les microparticules d'un flux d'effluent comprenant un effluent provenant de textiles traités ; éventuellement
lesdits textiles comprenant du coton ou du polycoton ; et/ou éventuellement lesdits textiles traités étant des textiles traités par lavage ; et/ou éventuellement, ladite utilisation du filtre à microparticules ou de l'appareil de traitement textile étant destinée à filtrer des microparticules de cellulose.

18. Procédé de filtration de microparticules à partir d'un effluent provenant d'un appareil de traitement textile comprenant :

   i. la fourniture d'un filtre à microparticules (700, 800, 900, 2000) selon l'une quelconque des revendications 1 à 15 ;
   ii. le placement du filtre à microparticules dans la première configuration ;
   iii. l'alimentation en effluent en provenance d'un appareil de traitement textile de l'entrée (703, 803, 2003) du filtre à microparticules ;
   iv. le filtrage de l'effluent à travers le milieu filtrant (706, 806, 906, 2006) et le passage de l'effluent filtré vers la sortie (704, 904, 2004) ;
   v. l'arrêt de l'alimentation en effluents ;
   vi. le placement du filtre à microparticules dans la seconde configuration ;
   vii. le fonctionnement de l'appareil d'élimination de résidus de filtre pour transférer le résidu de filtre de la chambre de filtration (701, 801, 901, 2001) à la chambre de collecte de résidus de filtre (707, 807, 907, 2007).

19. Procédé selon la revendication 18, comprenant en outre les étapes ultérieures de :

   vii. déplacement retour de l'élément mobile (705, 905, 2005) à la première configuration ;
   ix. reprise de l'alimentation en effluent et la filtration de celui-ci, et éventuellement

comprenant en outre les étapes de :

   x. répétition des étapes ii. à vii. une ou plusieurs fois ;
   xi. vidage des microparticules contenant le résidu en provenance de la chambre de collecte de résidus (707, 807, 907, 2007).

20. Procédé selon l'une quelconque des revendications 18 ou 19, ledit résidu de filtre étant déshydraté entre les étapes v et vi ; éventuellement, ladite déshydratation pouvant comprendre la rotation du milieu filtrant (706, 806, 906, 2006) pour éliminer par centrifugation l'eau du résidu, le soufflage d'air à travers le résidu, le chauffage du résidu ou l'application d'un vide au résidu ou toute combinaison de ceux-ci, et éventuellement, ledit résidu de filtre étant déshydraté dans la chambre de filtration (701, 801, 901, 2001).

FIG. 1a

FIG. 1b

FIG. 2

FIG. 3a

FIG. 3b

FIG. 4

FIG. 5

FIG. 6a

FIG. 6b

FIG. 6c

FIG. 7a

FIG. 7b

FIG. 8

900

945

952

934

942

901

951

936

943

935

909

931

930

914
905

937

907
944

50

FIG. 9a

FIG. 9b

FIG. 10a

FIG. 10b

FIG. 10c

EP 4 084 885 B1

FIG. 10d

FIG. 10e

FIG. 10f

FIG. 10g

2038

2006　　　　　　　2092　　　　　　　2006

2091

2072

2095

2093　　2094　　　　　　2080　　　　　　2081

FIG. 10h

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019081013 A1
- GB 2576859 A
- GB 2581790 A
- JP 2018175680 A